# EUROPEAN PATENT SPECIFICATION

(11) **EP 2 618 618 B1**
(45) Date of publication and mention of the grant of the patent: **29.04.2015**
(21) Application number: 11828119.5
(22) Date of filing: 27.09.2011
(51) Int. Cl.: H04L 5/00, H04W 72/04

(54) **METHOD AND SYSTEM FOR DATA TRANSMISSION**
VERFAHREN UND SYSTEM ZUR DATENÜBERTRAGUNG
PROCÉDÉ ET SYSTÈME PERMETTANT UNE TRANSMISSION DE DONNÉES

(30) Priority: 28.09.2010 CN 201010294643
(43) Date of publication of application: 24.07.2013
(73) Proprietor: Huawei Technologies Co., Ltd., Longgang District Shenzhen, Guangdong 518129 (CN)
(72) Inventor: LI, Bingzhao, Shenzhen Guangdong 518129 (CN); YAN, Kun, Shenzhen Guangdong 518129 (CN); CHEN, Yanyan, Shenzhen Guangdong 518129 (CN)
(74) Representative: Körber, Martin Hans
(86) International application number: PCT/CN2011/080245
(87) International publication number: WO 2012/041223

(56) References cited:
- WO-A1-03/094539
- WO-A1-2010/102456
- WO-A2-2010/005233
- CN-A- 101 296 027
- CN-A- 101 400 188
- CN-A- 101 483 914
- US-A1- 2009 270 103
- "3rd Generation Partnership Project; Technical Specification Group Radio Access Network; Radio Resource Control (RRC); Protocol Specification (Release 5)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.5.0, 1 June 2003 (2003-06-01), pages 1-994, XP050367953,

## Description

### Field of Technology

The present invention relates to communication technologies, and particularly, to a method and system for data transmission.

### Background of the Invention

Wireless communication systems are deployed widely to provide various communication services. For example, voice, video, packet data, broadcast and messaging services may be provided via such wireless communication systems. These communication systems may be multiple-access communication systems which can support the communication among a plurality of terminals by sharing the available system resources. Examples of the multiple access communication systems include code division multiple access (CDMA, Code Division Multiple Access) systems, time division multiple access (TDMA, Time Division Multiple Access) systems, frequency division multiple access (FDMA, Frequency Division Multiple Access) systems, and orthogonal frequency division multiple access (OFDMA, Orthogonal Frequency-Division Multiple Access) systems.

In general, a wireless multiple-access communication system may support a plurality of wireless terminals simultaneously. In such a communication system, each terminal may communicate with one or more base stations via transmissions on forward or reverse links. A forward link (or downlink) refers to the communication link from the base station to the terminal, and a reverse link (or uplink) refers to the communication link from the terminal to the base station. The communication links may be established via single-input single-output (SISO, Single-Input Single-Output), multiple-input single-output (MISO, Multiple-Input Single-Output) or multiple-input multiple-output (MIMO, Multiple-Input Multiple-Output) systems.

For example, in a current general packet radio service (GPRS, General Packet Radio Service) system, one mobile station (MS, Mobile Station) can only receive downlink data on one carrier frequency, and the operation bandwidth is 200KHz, which limits the data transmission rate obviously. For example, base on the data receiving scheme, in a current global system for mobile communication (GSM, Global System for Mobile communications) enhanced data rate for GSM evolution radio access network (EGRPS, GSM EDGE Radio Access Network) system, even four slots are assigned for one carrier frequency, the actual rate of the four slots can not reach 200kbps. With the development of data services, the existing rate can not meet the requirements of the users.

For another example, in a wideband code division multiple access wireless (WCDMA, Wideband Code Division Multiple Access Wireless) system, as the number of users increases, the existing network may not take its traffic. When network congestion and resource competition between data services and voice services occur, the communication performance of the network may be also influenced.

In view of the above, some communication equipment manufacturers put forward a new data transmission scheme, i.e. downlink dual carrier frequency/multi carrier frequency transmission. As the name suggests, downlink dual carrier frequency refers that one MS may receive downlink data on two carrier frequencies simultaneously; downlink multi carrier frequency refers that one MS may receive downlink data on a plurality of (e.g. at least three) carrier frequencies simultaneously. The downlink dual carrier frequency/multi carrier frequency transmission breaks the bandwidth limitation of communication systems, so that one MS can receive downlink data on more than one carrier frequency simultaneously. Assuming that the number of carrier frequencies for receiving downlink data is N, this transmission scheme may make the operation bandwidth reach 200×N KHz, and the corresponding data transmission rate is also increased proportionally according to the number of carrier frequencies. Still by taking the current EGRPS system as an example, the actual rate of one carrier frequency for which four slots are assigned is 200kbps, and the rate may be close to 1Mkbps if the MS can receive downlink data on five carrier frequencies simultaneously, which completely can meet the rate demand of a 3G system.

From the above, it can be seen that the capacity of the communication system can be increased and the communication quality can be improved by introducing the downlink dual carrier frequency/multi carrier frequency transmission scheme, and the downlink data transmission rate can be improved greatly merely by simply updating the scheme on the basis of the existing system. The scheme not only saves the investment of operators in equipments but also realizes the development of new services, which has a wide application prospect in communication systems.

In a multi-carrier-frequency WCDMA system, user equipment (UE, User Equipment) is working with WCDMA cells with multiple carrier frequencies at the same time. This process may be called as carrier frequency scheduling or cell scheduling, which improves the downlink and uplink data transmission rate of the UE greatly. Meanwhile, the interoperation on a plurality of carrier frequencies makes it possible for fast and dynamic load balancing among multi-carrier-frequency cells. The fast and dynamic load balancing can improve the throughput of original WCDMA cells and responsiveness to users.

UE has two basic operating modes: an idle mode and a connected mode.

The idle mode, merely having one idle state, refers to a state in which the user equipment is on standby and has no services. The UE stays in the idle mode after turned on.

The connected mode refers to a state in which the user equipment has completed a radio resource control (Radio Resource Control, RRC) connection setup with a radio network controller (Radio Network Controller, RNC). At this time, the user equipment has camped on a cell. The connected mode of the UE has four states: a CELL_DCH (Cell_Dedicated CHannel) state, a CELL_FACH (Cell_Forward Access Channel) state, a CELL_PCH (Cell_Paging Channel) state, a URA_PCH (Universal terrestrial radio access network Registration Area_Paging CHannel) state. After completing the RRC connection setup, the UE makes a transition from the idle mode to the connected mode, CELL_FACH or CELL_DCH. After the RRC connection is released, the UE makes a transition from the connected mode to the idle mode.

CELL_DCH state: a state in which a user equipment has a dedicated control channel (DCCH, Dedicated Control Channel) and a dedicated traffic channel (DTCH, Dedicated Traffic Channel), and uses the dedicated (or shared) channel for communication. The application scenarios of CELL_DCH: continuous or a large amount of data transmission, e.g. making calls, downloading.

CELL_FACH state: a state in which a user equipment has DCCH and DTCH, and may receive data on a forward access channel (FACH, Forward Access Channel) and send data on a random access channel (RACH, Random Access Channel), and may transmit messages on a common FACH/RACH without being assigned a dedicated channel. The application scenarios of CELL_FACH: a small amount of data transmission, e.g. signaling, short messages.

CELL_PCH state: a state in which a user equipment can not use DCCH and DTCH, and can not receive and send data, and merely monitors page indicator messages on a page indicator channel (PICH, Page Indicator Channel), and may merely send cell update (CELL Update) messages to a RNC. The application scenarios of CELL_PCH: discontinuous services (e.g. webpage browsing), and UEs moving in low speeds, e.g. the users in fixed areas.

URA_PCH state: a state in which a user equipment can not use DCCH and DTCH, and can not receive and send data, and merely monitors page indicator messages on a PICH in the downlink direction, and merely can send user registration area update (URA Update) or Cell Update messages to a RNC. The application scenarios of URA_PCH: discontinuous services, and UEs moving in high speeds, e.g. the users on transportation vehicle.

WO2010/005233A2 discloses a method for transmitting and receiving carrier group information. The method includes the steps of: a mobile terminal transmitting a first message containing multi-carrier performance information of the mobile terminal to a base station; and the mobile terminal receiving, from the base station, a second message containing allocation information on the wireless resource allocated on the basis of the multi-carrier information. Here, multi-carrier performance information includes a spectral mask-type parameter for the supportable multi-carrier of the mobile terminal.

US2009/270103A1 discloses a method for a multi-carrier wireless transmit receive unit. The method comprises: receiving downlink communications over a plurality of carriers; and performing mobility procedures using at least one of the plurality of carriers.

However, the current dual carrier frequency/multi carrier frequency technology can not be applied to UEs in the CELL_FACH state, and the UEs in the CELL_FACH state can not benefit from multi carrier frequency.

### Summary of the Invention

A brief summary of various aspects of the claimed subject matter is given below to try to provide a basic understanding of these aspects. The summary is not a detailed overview of all aspects conceived, and neither aims to indicate critical or decisive factors nor aims to describe scopes of these aspects. Its only purpose is to give some concepts of the disclosed aspects in the simplified form, as a preamble of the more detailed description given later.

According to one aspect, a method and system for data transmission are described in the present invention, which enables a UE in a CELL_FACH state to transmit data over dual carrier frequency/multi carrier frequency, which improves data transmission rate and data reliability.

Another aspect relates to a method for data transmission, comprising: receiving, by a base station controller, capability information reported by a user equipment, the capability information is used for indicating that dual carrier frequency/multi carrier frequency transmission is supported in a cell_forward access channel (CELL_FACH) state; configuring, by the base station controller, configuration information of dual carrier frequency/multi carrier frequency for the user equipment operating in the CELL_FACH, and sending, by the base station controller, the configuration information to the user equipment; sending, by the base station controller, a dual carrier frequency/multi carrier frequency operating parameter to a base station through user data, the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

Another aspect relates to an apparatus for data transmission, comprising: a receiving unit, configured to receive capability information reported by a user equipment, the capability information is used for indicating that dual carrier frequency/multi carrier frequency transmission is supported in a cell_forward access channel (CELL_FACH) state; a configuring unit, configured to configure configuration information of dual carrier frequency/multi carrier frequency for the user equipment operating in the CELL_FACH, and to send the configuration information to the user equipment; a sending unit, configured to send the configuration information of dual carrier frequency/multi carrier frequency to a base station and send a dual carrier frequency/multi carrier frequency operating parameter to the base station through user data, wherein the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

Another aspect relates to a method for data transmission, comprising: receiving, by a base station, capability information indicating that dual carrier frequency/multi carrier frequency transmission is supported in a cell_forward access channel (CELL_FACH) state, the capability information is reported by a user equipment; receiving, by the base station, configuration information of dual carrier frequency/multi carrier frequency for the user equipment operating in the CELL_FACH sent from a base station controller, and sending, by the base station, the configuration information to the user equipment; receiving, by the base station, a dual carrier frequency/multi carrier frequency operating parameter sent from the base station controller through user data, and performing, by the base station, dual carrier frequency/multi carrier frequency scheduling for the user data on the carrier frequency indicated by the dual carrier frequency/multi carrier frequency operating parameter.

Another aspect relates to an apparatus for data transmission, comprising: a receiving unit, configured to receive capability information indicating that dual carrier frequency/multi carrier frequency transmission is supported in a cell_forward access channel (CELL_FACH) state, the configuration information is reported by a user equipment; and receive configuration information of dual carrier frequency/multi carrier frequency for the user equipment operating in the CELL_FACH sent from a base station controller; and receive a dual carrier frequency/multi carrier frequency operating parameter sent from the base station controller through user data; a sending unit, configured to send the configuration information of dual carrier frequency/multi carrier frequency to the user equipment; a scheduling unit, configured to perform dual carrier frequency/multi carrier frequency scheduling for the user data on the carrier frequency indicated by the dual carrier frequency/multi carrier frequency operating parameter.

Through the above technical solutions, a UE in a CELL_FACH state can transmit data over dual carrier frequency/multi carrier frequency, which improves data transmission rate and reliability.

### Brief Description of the Drawings

To illustrate the technical solutions of the embodiments of the present invention more clearly, a brief introduction to the accompanying drawings needed in the description of the embodiments is given below. Apparently, the present invention is illustrated by examples rather than limitation in each of the accompanying drawings below in which the similar units are designated by the similar reference numerals. The accompanying drawings described below are just some embodiments of the present invention, based on which other drawings can be obtained by those skilled in the art without any inventive efforts.
Fig.1 is a schematic diagram illustrating distribution of cell carrier frequency of dual carrier frequency according to an embodiment of the present invention;
Fig.2 is a schematic diagram illustrating complete coverage of carrier frequency of dual carrier frequency according to another embodiment of the present invention;
Fig.3 is a schematic diagram illustrating partial coverage of carrier frequency of dual carrier frequency according to another embodiment of the present invention;
Fig.4 is a schematic diagram illustrating a structure of a communication system 400 according to another embodiment of the present invention;
Fig.5 is a schematic flowchart illustrating a method for data transmission according to another embodiment of the present invention;
Fig.6 is a schematic diagram illustrating a data structure of an extended high speed downlink shared channel data frame type 2 according to another embodiment of the present invention;
Fig.7 is a schematic flowchart illustrating a method for data transmission according to another embodiment of the present invention;
Fig.8 is a schematic flowchart illustrating a method for data transmission according to another embodiment of the present invention;
Fig.9 is a schematic flowchart illustrating a method for data transmission according to another embodiment of the present invention;
Fig. 10 is a schematic diagram illustrating a structure of an apparatus for data transmission according to another embodiment of the present invention;
Fig. 11 is a schematic diagram illustrating another structure of an apparatus for data transmission according to another embodiment of the present invention;
Fig. 12 is a schematic diagram illustrating a structure of an apparatus for data transmission according to another embodiment of the present invention;
Fig. 13 is a schematic diagram illustrating another structure of an apparatus for data transmission according to another embodiment of the present invention.

### Embodiments of the invention

In the following description, in order to illustrate rather than to limit, specific details, such as specific system architecture, interface, technology and the like, are mentioned, so as to understand the present invention thoroughly. However, those skilled in the art should understand that the present invention can also be implemented in other embodiments without these details. In other cases, the detailed description of the well-known devices, circuits and methods are omitted to avoid unnecessary details to hinder the description of the present invention.

Now various aspects of the claimed subject matter are described with reference to the accompanying drawings. The similar factors are always quoted by the similar reference numerals throughout the accompanying drawings. In the following description, numerous specific details are illustrated for explanation purpose to try to provide a thorough understanding of one or more aspects. However, it is apparent that various aspects can also be implemented without these specific details. In other embodiments, the common structures and devices are shown in the form of block diagram to assist in describing one or more aspects.

The terms used in the present invention such as "component", "module", "unit", "system" and the like aim to indicate related entities of computer, whether hardware, firmware, combination of hardware and software, software, or executed software. For example, components may be, but not limited to processes running on processors, integrated circuits, objects, the executables, executive threads, programs, and/or computers. As explanation, both applications running on computing equipments and the computing equipments may be the components. One or more components may reside on processes and/or executive threads, and a component may be partially and entirely in one computer and/or distributed among two or more computers. In addition, these components may be executed by various computer readable media storing various data structures therein. These components may communicate by means of local and/or remote processes, for example, communicate according to a signal having one or more data packets (e.g. data from a component, by means of which and a local system, a distributed system and/or crossing a network such as internet, the component is interacting with another component in other communication system).

Furthermore, various aspects are described in combination with wireless terminals and/or base stations in the present invention. A wireless terminal may refer to an equipment providing voice and/or data connectivity for a user. A wireless terminal may be connected to a computing device such as a laptop or a desk computer and the like, or other communication equipments, e.g. a self-contained equipment like a personal digital assistant (PDA, Personal Digital Assistant). The wireless terminal may be also termed as system, subscriber unit (Subscriber Unit), subscriber station (Subscriber Station), mobile station (Mobile Station), mobile (Mobile), remote station (Remote Station), access terminal (Access Terminal), user terminal (User Terminal), user agent (User Agent), user device (User Device), or user equipment (User Equipment). The wireless terminal may be a subscriber station, a wireless equipment, a cell phone, a personal communication service (PCS, Personal Communication Service) phone, a cordless phone, a session initiation protocol (SIP) phone, a wireless local loop (WLL, Wireless Local Loop) station, a personal digital assistant (PDA, Personal Digital Assistant), a handheld equipment with the function of wireless connection, or other processing equipment connected to a wireless modem. A base station (e.g. an access point) may refer to the equipment communicated with a wireless terminal though one or more sectors over an air interface in an access network. The base station may be used for converting the received air frame to and from IP packet, as a router between a wireless terminal and other parts of the access network, wherein other parts of the access network may comprise internet protocol (IP) network. The base station may also coordinate the attribute management of air interfaces.

Additionally, various aspects or features described in the present invention may use technical terms of standard programming and/or engineering technology for implementation of methods, apparatus or products. For example, the term "products" in the present invention aims to cover the readable computer programs from any computer readable equipment, carrier, or medium. For example, the computer readable media may comprise but not limited to magnetic storage device (e.g. hard disk, floppy disk, magnetic stripe...), optical disk (e.g. compact discs (CD), digital versatile disc (DVD, Digital Versatile Disc)...), smart card, and flash device (e.g. memory card, memory stick, USB flash disk...).

Various technologies described in the present invention can be applied to various communication systems, for example, global system for mobile communications (GSM, Global System for Mobile communications) system, code division multiple access (CDMA, Code Division Multiple Access) system, time division multiple access (TDMA, Time Division Multiple Access) system, wideband code division multiple access wireless (WCDMA, Wideband Code Division Multiple Access Wireless) system, frequency division multiple access (FDMA, Frequency Division Multiple Addressing) system, orthogonal frequency-division multiple access (OFDMA, Orthogonal Frequency-Division Multiple Access) system, single carrier frequency FDMA (SC-FDMA) system, general packet radio service (GPRS, General Packet Radio Service) system, long term evolution (LTE, Long Term Evolution) system and the like. The terms "system" and "network" are usually used interchangeably in the present invention. A CDMA system may implement radio technologies such as universal terrestrial radio access (UTRA, Universal Terrestrial Radio Access), CDMA2000, etc. The UTRA comprises wideband-CDMA (WCDMA) and other CDMA variants. Furthermore, CDMA2000 covers IS-2000, IS-95 and IS-856 standards. A TDMA system may implement radio technologies such as global system for mobile communications (GSM), etc. An OFDMA system may implement radio technologies such as evolved universal terrestrial radio access (E-UTRA, Evolved-UMTS Terrestrial Radio Access), ultra mobile broadband (UMB, Ultra Mobile Broadband), IEEE802.11 (Wi-Fi), IEEE802.16 (WiMAX), IEEE802.20, Flash-OFDMA, etc. UTRA and E-UTRA are parts of a universal mobile telecommunication system (UMTS, Universal Mobile Telecommunication System). 3GPP long term evolution (e.g. LTE) is the version of UMTS using E-UTRA, which may employ OFDMA in downlink while SC-FDMA in uplink. UTRA, E-UTRA, UMTS, LTE and GSM are described in the documents from "the third generation partnership project (3GPP)" organization. In addition, CDMA2000 and UMB are described in the documents from "the third generation partnership project 2 (3GPP2)" organization.

Various aspects are described in the form of a system which may comprise one or more devices, components, modules, or units, etc. It should be understood or comprehended that, various systems may comprise extra devices, components, modules and/or units and so on, and/or may not comprise all of the devices, components, modules, units discussed in conjunction with the accompanying drawings. In another aspect of the present invention, the combination of these methods may be also used.

In addition, the term "and/or" in the present invention just describes an associated relationship of associated objects, denoting three kinds of relationship. For example, "A and/or B" may denote that A is comprised alone, A and B are comprised simultaneously, B is comprised alone. Furthermore, the character "/" in the present invention generally denotes a relationship about "or" between the objects before and after it.

In various embodiments of the present invention, due to the similarity between dual carrier frequency technology and multi carrier frequency technology which are involved, the dual carrier frequency is more often taken as an example to illustrate various aspects below.

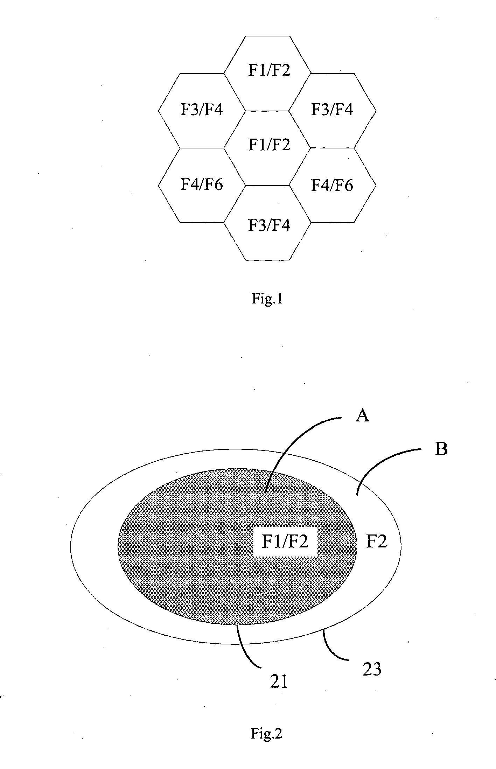

As shown in Fig.1, a schematic diagram of distribution of cell carrier frequency of dual carrier frequency in an embodiment of the present invention is illustrated. Assume that the communication system comprises six carrier frequencies: F1, F2, F3, F4, F5, F6, and the user equipment may receive downlink data via two carrier frequencies. A cell uniquely corresponds to a primary carrier frequency, and other carrier frequencies are secondary carrier frequencies in the cell. But a secondary frequency may also be a primary carrier frequency of another cell.

In General, for dual carrier frequency/multi carrier frequency, two adjacent carrier frequencies generally differ by a certain value, for example, 5MHz, 10Mhz, 15Mhz, etc. The coverage of low frequency is larger, and the coverage of high frequency is smaller. Therefore, the coverage of two carrier frequencies may overlap entirely or partially.

As shown in Fig.2, a schematic diagram of complete coverage of carrier frequency of dual carrier frequency in another embodiment of the present invention is illustrated. Assume that there are two carrier frequencies F1 and F2, and the relationship of the frequency values is: F1>F2. The coverage of the F1 is a cell 21 in the figure, and the F1 is the primary carrier frequency of the cell 21. The coverage of the F2 is a cell 23 in the figure, and the F2 is the primary carrier frequency of the cell 23. The coverage of F1 is covered by the coverage of F2 entirely. In the overlapping area A, the user equipment may use the carrier frequencies F1 and F2, and then there may be paired cell (21, 23) in the area A. In the non-overlapping area B, the user equipment may use the carrier frequency F2, but can not use the carrier frequency F1.

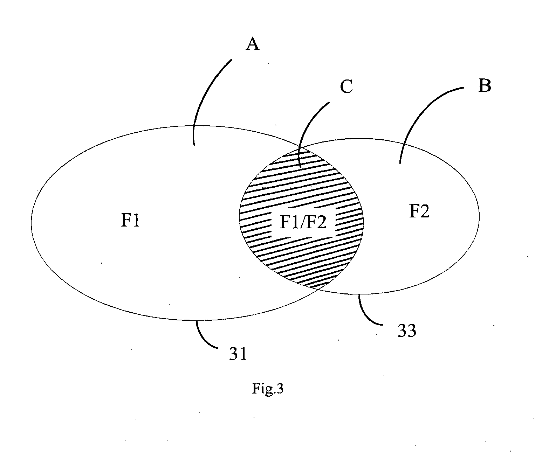

As shown in Fig.3, a schematic diagram of partial coverage of carrier frequency of dual carrier frequency in another embodiment of the present invention is illustrated. Assume that there are two carrier frequencies F2 and F2, and the relationship between the frequency values is: F1<F2. The coverage of the F1 is a cell 31 in the figure, and the F1 is the primary carrier frequency of the cell 31. The coverage of the F2 is a cell 33 in the figure, and the F2 is the primary carrier frequency of the cell 33. The coverage of the F1 and the coverage of the F2 partially overlap. In the overlapping area C, a user equipment may use the carrier frequencies F1 and F2, and then there may be paired cell (31, 33) in the area C. In the non-overlapping area A in the coverage of the F1, the user equipment may use the carrier frequency F1, but can not use the carrier frequency F2. In the non-overlapping area B in the coverage of the F2, the user equipment may use the carrier frequency F2, but can not use the carrier frequency F1.

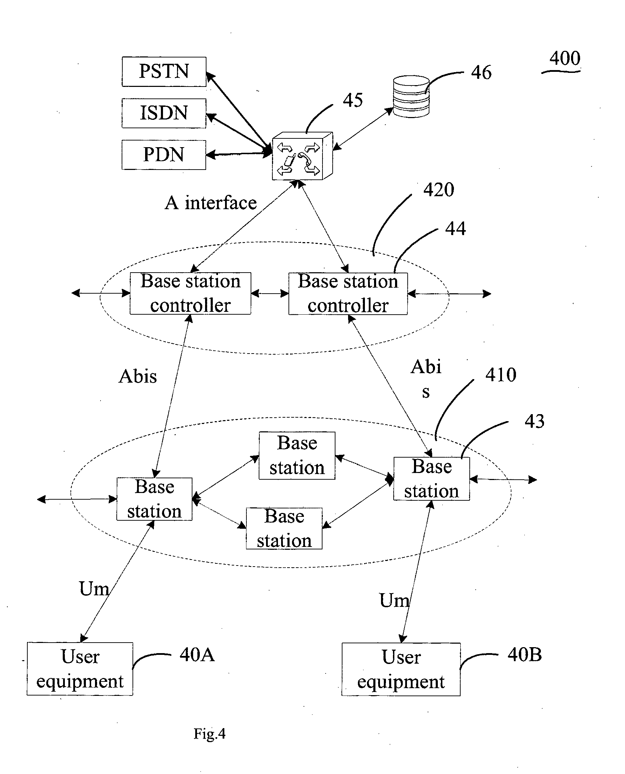

As shown in Fig.4, a schematic diagram of a structure of a communication system 400 in another embodiment of the present invention is illustrated as follows. The communication system 400 may be a communication system such as GSM, GPRS, WCDMA or TDMA, etc.

The communication system 400 may comprise a transmission plane 410, a control plane 420, a MSC/VLR 45 and a HLR 46. The transmission plane 410 may comprise one or more base stations 43 coupled mutually by optical fibers. Similarly, the control plane 420 may comprise one or more base station controllers 44 coupled mutually by optical fibers. Furthermore, the base station 43 and the base station controller 44 may be connected by these optical fibers. The above base station 43, base station controller 44 and the MSC/VLR 45 may be communicated with each other by light, electricity or radio. A plurality of signals may be transmitted via light paths within the above transmission plane 410, and transmitted to other communication equipments, such as the base station controller 44, via the above base station 43.

User equipments 40A, 40B may access a network via the base stations 43, for example, via the same base station, or via different base stations.

MSC/VLR 45 may further be communicated with the HLR 46, a public data network, a public telephone network and an integrated services digital network.

Furthermore, at least some base stations, such as the base stations located at the edge of the transmission plane 410, may transmit data to other base stations or other base station controllers, wherein the above data is applied to the above transmission plane 410. Similarly, at least some base station controllers, such as the base station controllers located at the edge of the control plane 420, may transmit data to other base station controllers or other MSC/VLR, wherein the above data is applied to the above control plane 420.

Although only four base stations 43, two base station controllers 44 and one MSC/VLR 45 are shown in the communication system 400 shown in the figure, the communication system 400 may also comprise any number of base stations 43, base station controller 44 or MSC/VLR 45. Furthermore, as shown in Fig.4, there may be one-to-one connection relationship between a plurality of base station controllers 44 and a plurality of base stations 43. A plurality of base stations 43 may also be connected to one base station controllers 44, and vice versa. Similarly, as shown in Fig.4, a plurality of base station controllers 44 may be connected to one MSC/VLR 45, or a plurality of base station controllers 44 may be connected to a plurality of MSCs/VLRs 45, i.e. the base station controllers 44 may be connected to one or more MSCs/VLRs 45.

In another embodiment of the present invention, the user equipments 40A, 40B may be communicated with the base station 43 via an Um interface. The base station 43 may be communicated with the base station controller 44 via an Abis interface, for example, their physical layers may connected by optical fibers or in other connection ways (e.g. E1). The base station controller 44 may be communicated with the MSC/VLR 45via an A interface, for example, they are connected by optical fibers or in other transmission ways. The MSC/VLR 45 may be communicated with the HLR 46 via a C interface, for example, they are connected by optical fibers or in other transmission ways. Of course, these equipments may also be communicated via other interfaces or custom interfaces, which is not defined in the present invention.

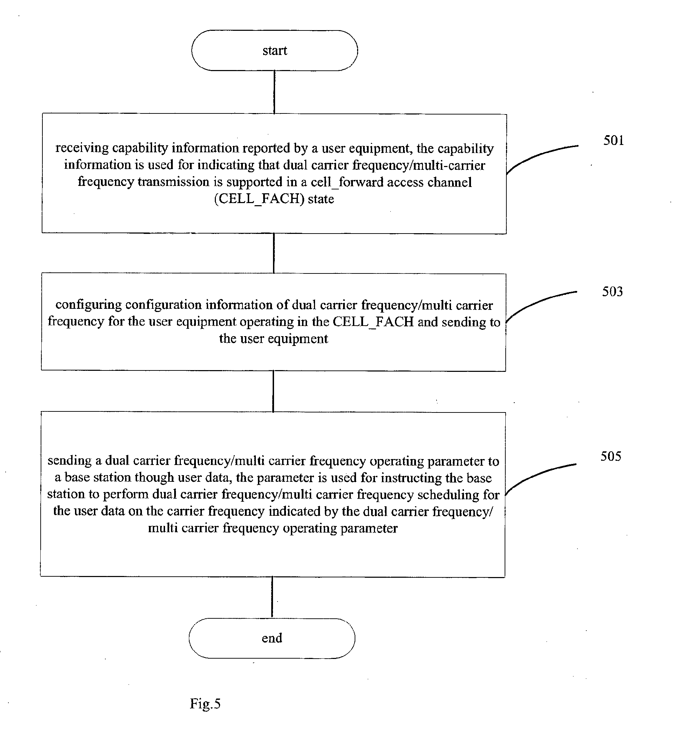

As shown in Fig.5, a schematic flowchart of a method for data transmission in another embodiment of the present invention is illustrated. The method for data transmission may be described as follows in combination with Fig.4.
501, receiving capability information reported by a user equipment, the capability information is used for indicating that dual carrier frequency/multi-carrier frequency transmission is supported in a cell_forward access channel (CELL_FACH) state.

For example, the base station controller 44 receives a radio resource control (RRC) message sent from the user equipment 40A or the user equipment 40B, wherein the RRC message carries the capability information indicating that dual carrier frequency/multi-carrier frequency transmission is supported by the user equipment in a cell_forward access channel (CELL_FACH) state.
503, configuring configuration information of dual carrier frequency/multi carrier frequency for the user equipment operating in the CELL_FACH, and sending the configuration information to the user equipment.

For example, the base station controller 44 configures the configuration information of dual carrier frequency/multi carrier frequency for the user equipment operating in the CELL_FACH, and sends it to the user equipment 40A or the user equipment 40B via the base station 43.
505, sending a dual carrier frequency/multi carrier frequency operating parameter to a base station through user data, the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

For example, the base station controller 44 sends the dual carrier frequency/multi carrier frequency operating parameter carried by a FP (Frame Protocol) of the user data to the base station 43.

In another embodiment of the present invention, the step of sending, by the base station controller 44, the dual carrier frequency/multi carrier frequency operating parameter carried by a FP (Frame Protocol) of the user data to the base station 43 comprises: the base station controller 44 sending the dual carrier frequency/multi carrier frequency operating parameter carried in a high speed downlink shared channel data frame type 2 (HS-DSCH DATA FRAME TYPE 2) of the FP to the base station 43.

In another embodiment of the present invention, the dual carrier frequency/multi carrier frequency operating parameter includes a new IE flag (New Flags IE) indicating whether there is paired cell information, and the dual carrier frequency/multi carrier frequency operating parameter further includes the paired cell information if the new IE flag indicates that there is the paired cell information.

In another embodiment of the present invention, if the dual carrier frequency/multi carrier frequency operating parameter includes the paired cell information, the dual carrier frequency/multi carrier frequency operating parameter further includes the number of paired cells and/or a high speed shared channel radio network temporary identity (H-RNTI, HS-DSCH Radio Network Temporary Identity) and/or a measurement result of the signal strength or quality of secondary carried frequency cell.

In another embodiment of the present invention, if the dual carrier frequency/multi carrier frequency operating parameter includes the paired cell information, the paired cell information is a paired cell identity or an index of the paired cell identity in a coordination neighbour cell list, wherein the coordination neighbour cell list includes a coordination list in the same frequency range and a coordination list in different frequency ranges.

In another embodiment of the present invention, the base station controller 44 receives a configuration response message sent from the user equipment 40A or the user equipment 40B, wherein the configuration response message carries an initial measurement result of the signal strength or signal quality of secondary carrier frequency.

In another embodiment of the present invention, before the base station controller 44 receives capability information which is reported by the user equipment indicating that dual carrier frequency/multi carrier frequency transmission is supported in a cell_forward access channel (CELL_FACH) state, the method further comprises the following steps, that is, the base station controller 44 creates pre-paired cell information of a local cell in which currently the user equipment is; and the base station controller 44sends the pre-paired cell information of the local cell to the user equipment by broadcasting system information via the base station 43.

In another embodiment of the present invention, the pre-paired cell information includes a cell index of the pre-paired cell.

In another embodiment of the present invention, after the base station controller 44 configures configuration information of dual carrier frequency/multi carrier frequency for the user equipment operating in CELL_FACH, the method further comprises the following steps, that is: the base station controller 44 schedules a pre-paired cell in the pre-paired cell information according to the pre-paired cell information; and the base station controller 44 sends the configuration information of the dual carrier frequency/multi carrier frequency to the user equipment in the scheduled pre-paired cell.

In another embodiment of the present invention, the step of creating pre-paired cell information of a local cell in which currently the user equipment is comprises: in the process of cell setup or physical shared channel reconfiguration, the base station controller 44 creating the pre-paired cell information of the local cell in which currently the user equipment is.

From the above, it can be seen that the above solution enables a UE in a CELL_FACH state to transmit data over dual carrier frequency/multi carrier frequency, which improves data transmission rate and data reliability.

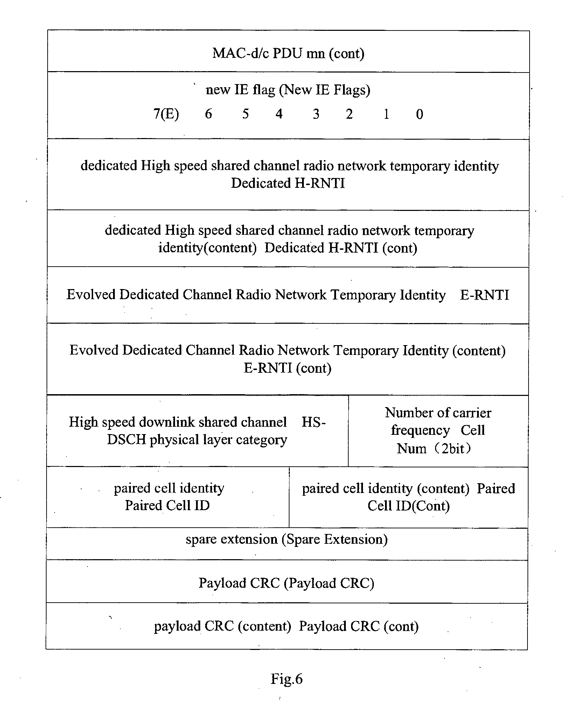

For example, as shown in Fig.6, a schematic diagram of a data structure of an extended high speed downlink shared channel data frame type 2 in another embodiment of the present invention is illustrated.

As shown in Fig.6, after extension of the data structure, bit 2 of a new IE flag (New Flags IE) indicates whether there is a paired cell identity (Paired Cell ID). It is denoted that there is a paired cells identity if the bit 2 is set to 1, and there is not a paired cells identity if the bit 2 is set to 0, and vice verse.

If the New Flags IE indicates that there is a paired cell identity, the Paired Cell ID may stored after an information element of high speed downlink shared channel physical layer category (HS-DSCH physical layer category). The first two bits indicate the number of paired carrier frequency (Cell Num), or this field may not exist if merely one paired carrier frequency is defined in the system. Next the cell identity (cell ID) of each paired carrier frequency is stored, wherein the cell ID may correspond to a local cell identity (local cell id), or a cell identity (Cell ID) in the cell setup, or an index corresponding to possibly paired neighbour cell reported. Each cell ID takes up N bits, wherein N may a value between 4 and 32. The Paired Cell ID (cont) indicates that there may also be at least a plurality of paired cell identities.

The specific method for setting a high speed shared channel radio network temporary identity (H-RNTI) of secondary carrier frequency or a measurement result of signal strength or quality of secondary carrier frequencies by UE is same as the setting method for the paired cell id.

In another embodiment of the present invention, the method further comprises the following steps, that is: the base station controller sends the configuration information to the user equipment via the base station; and the base station controller receives a configuration response message sent from the user equipment, wherein the configuration response message carries an initial measurement result of signal strength or signal quality of secondary carrier frequency.

In another embodiment of the present invention, before the step of receiving capability information which is reported by a user equipment indicating that dual carrier frequency/multi carrier frequency transmission is supported in a cell_forward access channel (CELL_FACH) state, the method further comprises: creating pre-paired cell information of a local cell in which currently the user equipment is; sending the pre-paired cell information of the local cell to the user equipment by broadcasting system information.

In another embodiment of the present invention, the pre-paired cell information includes a cell index of the pre-paired cell.

In another embodiment of the present invention, after the step of configuring configuration information of dual carrier frequency/multi carrier frequency for the user equipment operating in CELL_FACH, the method further comprises: scheduling a pre-paired cell in the pre-paired cell information according to the pre-paired cell information; sending the configuration information of the dual carrier frequency/multi carrier frequency to the user equipment in the scheduled pre-paired cell.

In another embodiment of the present invention, the step of creating pre-paired cell information of a local cell in which currently the user equipment is comprises: creating the pre-paired cell information of the local cell in which currently the user equipment is during the process of cell setup or physical shared channel reconfiguration.

From the above, it can be seen that the above solution enables a UE in a CELL_FACH state to transmit data over dual carrier frequency/multi carrier frequency, which improves data transmission rate and data reliability.

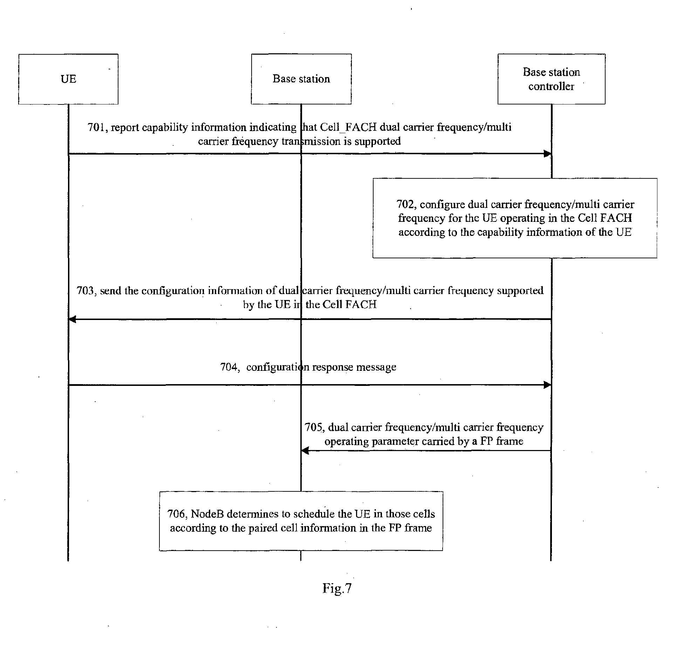

As shown in Fig.7, a schematic flowchart of a method for data transmission in another embodiment of the present invention is illustrated. The method for data transmission may be described as follows.
701, UE reports capability information indicating that CELL_FACH dual carrier frequency/multi carrier frequency transmission is supported by the UE via a radio resource control (RRC, Radio Resource Control) message.

The RRC message may be a radio resource control connection request (RRC Connection Request) message or a radio resource control setup complete (RRC Connection Setup Complete) message, etc.
702, a base station controller obtains the capability information indicating that CELL_FACH dual carrier frequency/multi carrier frequency transmission is supported by the UE, and configures the UE to operate in the Cell FACH dual carrier frequency/multi carrier frequency according to the capability information of the UE.

For example, a RNC obtains the capability information indicating that the Cell FACH dual carrier frequency/multi carrier frequency transmission is supported by the UE, and determines whether the dual carrier frequency/multi carrier frequency transmission for the UE in Cell FACH is enabled according to the capability information having the value of true or false, and configures configuration information of dual carrier frequency/multi carrier frequency for the user equipment operating in the CELL_FACH.
703, the base station controller sends the configuration information of dual carrier frequency/multi carrier frequency supported by the UE in the Cell FACH to the UE.

Through a RRC message, the base station controller sends the configuration information of dual carrier frequency/multi carrier frequency supported by the UE in the Cell FACH to the user equipment via the base station, and configures configuration information of paired secondary carrier frequency for the UE through the RRC message. For example, the configuration information of secondary carrier frequency includes parameters of HS-SCCH of the secondary carrier frequency, the highest modulation mode of the secondary carrier frequency, and so on. One cell merely has one primary frequency point, and may have at least one paired secondary frequency point. The RRC message may be a RRC connection setup (RRC CONNECTION SETUP) message, a radio bearer setup (RB Setup) message, or a radio bearer reconfiguration (RB reconfiguration) message, etc.
704, the UE sends a configuration response message to the base station controller.

The UE confirms the success of the configuration in a RRC message in response to configuration of dual carrier frequency/multi carrier frequency transmission, wherein the response message varies with the message chosen in step 702. For example, the confirmation message is a radio bearer setup complete message (RB setup complete) if the CELL_FACH dual carrier frequency/multi carrier frequency supported by the UE is configured in a RB setup message in step 702, and the confirmation message is a RRC connection setup complete message (RRC CONNECTION SETUP COMPLETE) if the CELL_FACH dual carrier frequency/multi carrier frequency supported by the UE is configured in a RRC CONNECTION SETUP message in step 702, and so on. Furthermore, the configuration response message may carry an initial measurement result of signal strength or signal quality of secondary carrier frequency.
705, the base station controller sends a dual carrier frequency/multi carrier frequency operating parameter carried by a FP frame to the base station after receiving the configuration response.

For example, the base station sends the dual carrier frequency/multi carrier frequency operating parameter carried in the high speed downlink shared channel data frame type 2 (HS-DSCH DATA FRAME TYPE 2) of the FP frame to the base station. The dual carrier frequency/multi carrier frequency operating parameter includes a new IE flag (New Flags IE) indicating whether there is paired cell information. If the new IE flag indicates that there is the paired cell information, the dual carrier frequency/multi carrier frequency operating parameter further includes the paired cell information. The foregoing Fig.6 may be used as a reference for the specific manner of carrying the paired cell information.

In another embodiment of the present invention, if the dual carrier frequency/multi carrier frequency operating parameter includes the paired cell information, the dual carrier frequency/multi carrier frequency operating parameter further includes the number of paired cells and/or a high speed shared channel radio network temporary identity (H-RNTI) and/or a measurement result of signal strength or quality of secondary carried frequency cell.

In another embodiment of the present invention, if the dual carrier frequency/multi carrier frequency operating parameter includes the paired cell information, the paired cell information is a paired cell identity or an index of the paired cell identity in a coordination neighbour cell list, wherein the coordination neighbour cell list includes coordination list in same frequency range and coordination list in different frequency ranges.

For example, the base station controller starts to send a paired cell number and information of H-RNTI of the secondary carrier frequency which are carried by a first downlink FP frame to the base station after receiving the configuration response.

For example, the base station controller determines to send downlink data to the user on dual carrier frequency/multi carrier frequency, and sends downlink user data (e.g. which is carried on a FP frame) carrying the paired cell information to the base station. There may be one or more paired cells. The paired cell information may be the cell ID. The cell ID may be 16 bits carried in a FP frame. An index of a cell in the paired neighbour cell list may be carried after further optimization. For example, the optimized solution may be illustrated as follows.

In the dual carrier frequency/multi carrier frequency technology, the base station may report a possibly paired neighbour cell list to the base station controller. The base station controller determines paired relationship according to the possibly paired neighbour cells finally. For example, the base station reports that a cell list which may be paired with the local cell (e.g. local cell ID=0) is 2, 3, 4. The dual carrier frequency/multi carrier frequency cell pairs which may be configured by the base station controller are: (0, 2), (0, 3), (0, 4), or (0, 2, 3), or (0, 2, 3, 4), etc. Currently, the number of possible neighbour cells is 32 at most, which takes up 5 bits in binary coding. The base station controller may designate the paired cell information with an index in the neighbour list. 11 bits in the overhead may be saved compared to the cell id with 16 bits when one piece of the paired cell information is designated, and 33 bits in the overhead may be saved when three pieces of the paired cell information are designated. For example, the base station reports three coordination neighbour cells in the coordination neighbour list of neighbour frequency, and the base station controller may designate which coordination neighbour cell can be paired when the FP frame carries the paired cell information, without the Cell ID of the neighbour cell being carried.
706, the base station determines to schedule the UE in those cells according to the paired cell information in the FP frame.

The base station determines to schedule downlink data in those paired cells according to the paired cell information carried by the user data.

From the above, it can be seen that the above solution enables a UE in a CELL_FACH state to transmit data over dual carrier frequency/multi carrier frequency, which improves data transmission rate and data reliability.

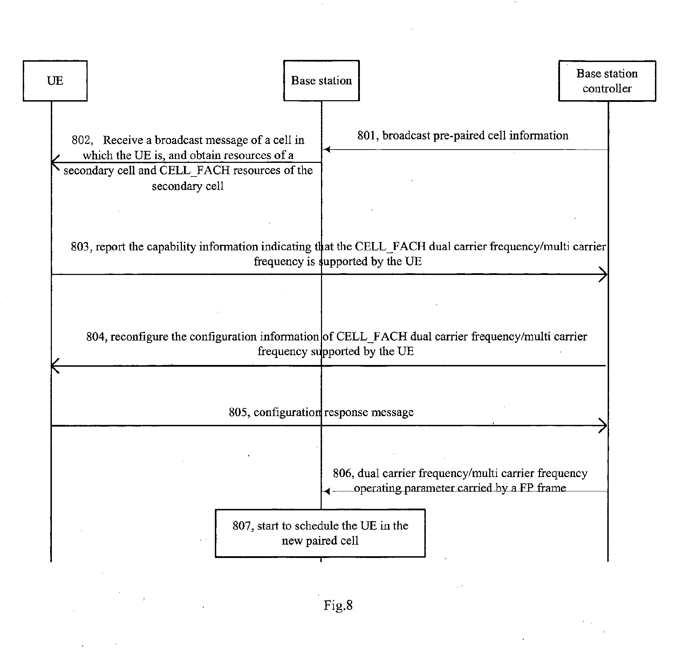

As shown in Fig.8, a schematic flowchart of a method for data transmission in another embodiment of the present invention is illustrated. The method for data transmission may be described as follows.

In order that a UE can transmit data in the mode of dual carrier frequency/multi carrier frequency before not receiving the configuration information of dual carrier frequency/multi carrier frequency, for example, set up RRC connection may be sent on dual carrier frequency, which is faster and reliable and beneficial to further improve data transmission rate, the technical solution provided by the present invention enables the UE to receive configuration information of dual carrier frequency/multi carrier frequency in the mode of dual carrier frequency/multi carrier frequency.
801, pre-paired information is broadcasted.

For example, a base station controller designates the pre-paired cell information of the cell in cell setup or physical shared channel reconfiguration. For example, the local cell identity (local cell ID) is 0, and the pre-paired cell information of the local cell is: (0, 2), (0, 3). The base station controller broadcasts the configured pre-paired cell information to the base station during broadcast.
802, a UE receives a broadcast message of a cell in which the UE is, and obtains a secondary cell and CELL_FACH resources of the secondary cell.

The base station controller sends the pre-paired cell information of the cell in the system information broadcast via the base station. The pre-paired cell information includes a cell identity or a cell index of the pre-paired cell, and further includes configuration of common signaling bearer of the pre-paired cell. The UE obtains the resources of a secondary cell and CELL_FACH resources of the secondary cell carried by the broadcast message.
803, the capability information indicating that the CELL_FACH dual carrier frequency/multi carrier frequency is supported by the UE is reported.

The UE sends a connection setup request, such as a RRC CONNECTION REQUEST, which carries the capability information indicating that dual carrier frequency/multi carrier frequency is supported by the UE in the CELL_FACH, to the base station controller after reading the system information broadcast. In another embodiment of the present invention, the connection setup request may further carry RACH measured values of the primary and secondary cells, e.g. initial measurement results of signal strength or quality of the current local cell (i.e. the primary cell) and the pre-paired cell.
804, the configuration information of the Cell FACH dual carrier frequency/multi carrier frequency supported by the UE is reconfigured and sent to the UE.

For example, the base station controller reconfigures the configuration information of the CELL_FACH dual carrier frequency/multi carrier frequency supported by the UE according to the received capability information indicating that the CELL_FACH dual carrier frequency/multi carrier frequency is supported by the UE, and sends the configuration information of dual carrier the CELL_FACH frequency/multi carrier frequency supported by the UE to the UE via the base station, for example, through a RB setup message or a RRC CONNECTION SETUP, the configuration information of dual carrier the CELL_FACH frequency/multi carrier frequency carries an indication indicating that the configuration information of the CELL_FACH dual carrier frequency/multi carrier frequency supported by the UE may be scheduled in the pre-paired cell when it is sent to the base station. For example, the indication may be indicated by a new bit in the frame protocol. If the bit is set to true, it may indicate that the base station schedules over the cell pairs pre-paired in step 801, or the reconfigured paired cell information is carried in the user data. The foregoing embodiment of Fig.7 may be used as a reference for the implementation of the paired cell information, which will not be repeated redundantly herein. The reconfigured paired cells and the pre-paired cells may be same or different, or same partially. For example, if the pre-paired cells are: (0, 2), (0, 3), the reconfigured paired cells may be (0, 2), (0, 3), and may be also (0, 2), (0,4), or (0, 4), (0, 5).

The base station sends the configuration information of the CELL_FACH dual carrier frequency/multi carrier frequency supported by the UE to the UE over the pre-paired multi carrier frequency according to the indication.
805, the UE sends a configuration response message to the base station controller.

The UE confirms the success of the configuration in a RRC message in response to configuration of dual carrier frequency/multi carrier frequency transmission, wherein the response message varies with the message chosen in step 804. For example, the confirmation message is a radio bearer setup complete (RB setup complete) message if the CELL_FACH dual carrier frequency/multi carrier frequency supported by the UE is configured in a RB setup message in step 804, and the confirmation message is a RRC connection setup complete (RRC CONNECTION SETUP COMPLETE) message if the CELL_FACH dual carrier frequency/multi carrier frequency supported by the UE is configured in a RRC CONNECTION SETUP message in step 804, and so on. Furthermore, the con figuration response message may carry an initial measurement result of signal strength or signal quality of secondary carrier frequency.
806, the base station controller sends a dual carrier frequency/multi carrier frequency operating parameter carried by a FP frame to the base station after receiving the configuration response.

For example, the base station controller sends the dual carrier frequency/multi carrier frequency operating parameter carried in a high speed downlink shared channel data frame type 2 (HS-DSCH DATA FRAME TYPE 2) of the FP to the base station. The dual carrier frequency/multi carrier frequency operating parameter includes a new IE flag (New Flags IE) indicating whether there is paired cell information, and the dual carrier frequency/multi carrier frequency operating parameter further includes the paired cell information if the new IE flag indicates that there is the paired cell information. The foregoing Fig.6 may be used as a reference for the specific manner of carrying the paired cell information.

In another embodiment of the present invention, if the dual carrier frequency/multi carrier frequency operating parameter includes the paired cell information, the dual carrier frequency/multi carrier frequency operating parameter further includes the number of paired cells and/or a high speed shared channel radio network temporary identity (H-RNTI) and/or a measurement result of signal strength or quality of secondary carried frequency cell.

In another embodiment of the present invention, if the dual carrier frequency/multi carrier frequency operating parameter includes the paired cell information, the paired cell information is a paired cell identity or an index of the paired cell identity in a coordination neighbour cell list, wherein the coordination neighbour cell list includes coordination list in same frequency range and coordination list in different frequency ranges.

For example, the base station controller starts to send a paired cell number and information of H-RNTI of the secondary carrier frequency which are carried in a first downlink FP frame to the base station after receiving the configuration response.

For example, the base station controller determines to send downlink data to the user on dual carrier frequency/multi carrier frequency, and sends downlink user data (e.g. which is carried on the FP frame) carrying the paired cell information to the base station. There may be one or more paired cells. The paired cell information may be the cell ID. The cell ID may be 16 bits carried in the FP frame. An index of a cell in the paired neighbour cell list may be carried after further optimization. For example, the optimized solution may be illustrated as follows.

In the dual carrier frequency/multi carrier frequency technology, the base station may report a possibly paired neighbour cell list to the base station controller. The base station controller determines paired relationship according to the possibly paired neighbour cells finally. For example, the base station reports that a cell list which may be paired with the local cell (e.g. local cell ID=0) is 2, 3, 4. The dual carrier frequency/multi carrier frequency cell pairs which may be configured by the base station controller are: (0, 2), (0, 3), (0, 4), or (0, 2, 3), or (0, 2, 3, 4), etc. Currently, the number of possible neighbour cells is 32 at most, which takes up 5 bits in binary coding. The base station controller may indicate the paired cell information with an index in the neighbour list. 11 bits in the overhead may be saved compared to the cell Id with 16 bits when one piece of the paired cell information is designated, and 33 bits in the overhead may be saved when three pieces of the paired cell information are designated. For example, the base station reports three coordination neighbour cells in the coordination neighbour list of neighbour frequency, and the base station controller may designate which coordination neighbour cell can be paired when the FP frame carries the paired cell information, without the Cell ID of the neighbour cell being carried. If there are more than one coordination neighbour list reported by the base station, for example, a coordination neighbour list of neighbour frequency and a coordination neighbour list of across frequency which are reported, the base station controller further needs to designate the corresponding neighbour list when designating an index in the coordination neighbour list. For example, if there is more than one coordination neighbour cell list, an identity of a coordination neighbour cell list is further indicated in the FP while an index of a cell identity in the coordination neighbour cell list is indicated in the FP. For example, 0 may indicate the coordination neighbour list of neighbour frequency, and 1 may indicate the coordination neighbour list of across frequency. When the base station controller indicates a paired cell to be the second cell in the coordination neighbour list of neighbour frequency, the binary 000001 in the FP frame is sent, wherein the leftmost bit 0 indicates that the neighbour list is the coordination neighbour list of neighbour frequency, and the right 00001 indicates the second cell in the coordination neighbour list of neighbour frequency.
807, the base station determines to schedule the UE in those cells according to the new paired cell information in the FP frame.

The base station determines to schedule downlink data in those paired cells according to the paired cell information carried in the user data.

From the above, it can be seen that the above solution enables a UE in a CELL_FACH state to transmit data over dual carrier frequency/multi carrier frequency, which improves data transmission rate.

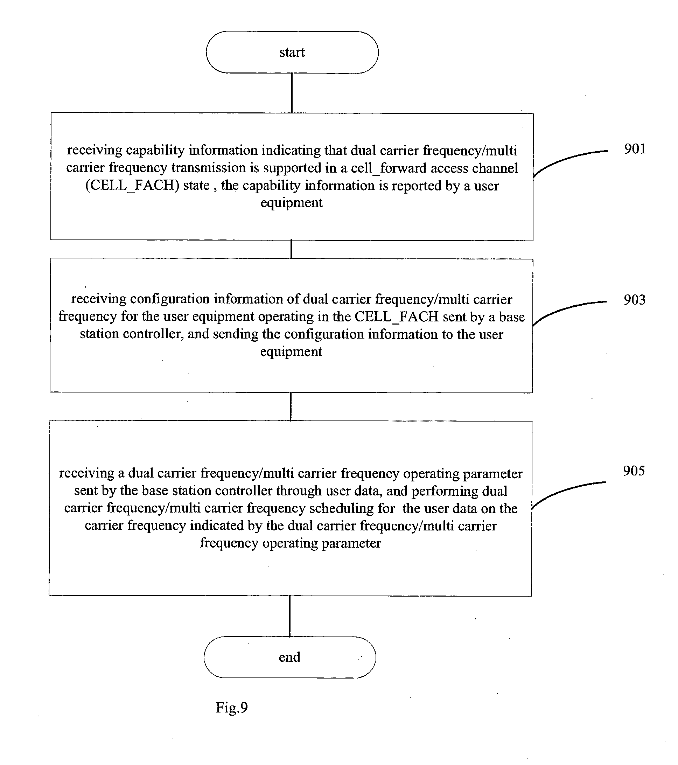

As shown in Fig.9, a schematic flowchart of a method for data transmission in an embodiment of the present invention is illustrated. The method for data transmission may be illustrated as follows.
901, receiving capability information reported by a user equipment, wherein the capability information indicates that dual carrier frequency/multi carrier frequency transmission is supported in a cell_forward access channel (CELL_FACH) state.

For example, the base station receives a radio resource control (RRC) message sent from the user equipment, wherein the RRC message carries the capability information indicating that dual carrier frequency/multi carrier frequency transmission is supported by the user equipment in the cell_forward access channel (CELL_FACH) state.
903 , receiving configuration information of dual carrier frequency/multi carrier frequency for the user equipment operating in the CELL_FACH sent from a base station controller, and sending the configuration information to the user equipment.

For example, the base station receives, from the base station controller, the configuration information of dual carrier frequency/multi carrier frequency for the user equipment operating in the CELL_FACH and sends the configuration information to the user equipment.

In another embodiment of the present invention, the base station receives a configuration response message sent from the user equipment and forwards it to the base station controller, wherein the configuration response message carries an initial measurement result of signal strength or signal quality of secondary carrier frequency.
905, receiving a dual carrier frequency/multi carrier frequency operating parameter sent from the base station controller through user data, and performing dual carrier frequency/multi carrier frequency scheduling for the user data on the carrier frequency indicated by the dual carrier frequency/multi carrier frequency operating parameter.

For example, the base station receives a Frame Protocol (FP) of user data sent from the base station controller, wherein the FP carries the dual carrier frequency/multi carrier frequency operating parameter.

The step of the FP carrying the dual carrier frequency/multi carrier frequency operating parameter comprises: carrying the dual carrier frequency/multi carrier frequency operating parameter in the high speed downlink shared channel data frame type 2 (HS-DSCH DATA FRAME TYPE 2) of the FP frame.

The dual carrier frequency/multi carrier frequency operating parameter includes a new IE flag (New Flags IE) indicating whether there is paired cell information, and the dual carrier frequency/multi carrier frequency operating parameter further includes the paired cell information if the new IE flag indicates that there is the paired cell information.

If the dual carrier frequency/multi carrier frequency operating parameter includes the paired cell information, the dual carrier frequency/multi carrier frequency operating parameter further includes the number of paired cells and/or the high speed shared channel radio network temporary identity (H-RNTI) and/or a measurement result of signal strength or quality of secondary carried frequency cell.

In another embodiment of the present invention, if the dual carrier frequency/multi carrier frequency operating parameter includes the paired cell information, the paired cell information is a paired cell identity or an index of the paired cell identity in a coordination neighbour cell list, wherein the coordination neighbour cell list includes coordination list in same frequency range and coordination list in different frequency ranges.

In another embodiment of the present invention, before the base station receives capability information indicating that dual carrier frequency/multi carrier frequency transmission is supported in a cell_forward access channel (CELL_FACH) state which is reported by a user equipment, the base station further receives pre-paired cell information of a local cell in which currently the user equipment is, which is created by the base station controller; and sends the pre-paired cell information of the cell to the user equipment by broadcasting system information.

In another embodiment of the present invention, the base station schedules a pre-paired cell in the pre-paired cell information according to the pre-paired cell information; and sends the configuration information of the dual carrier frequency/multi carrier frequency to the user equipment in the scheduled pre-paired cell.

From the above, it can be seen that the above solution enables a UE in a CELL_FACH state to transmit data over dual carrier frequency/multi carrier frequency, which improves data transmission rate and data reliability.

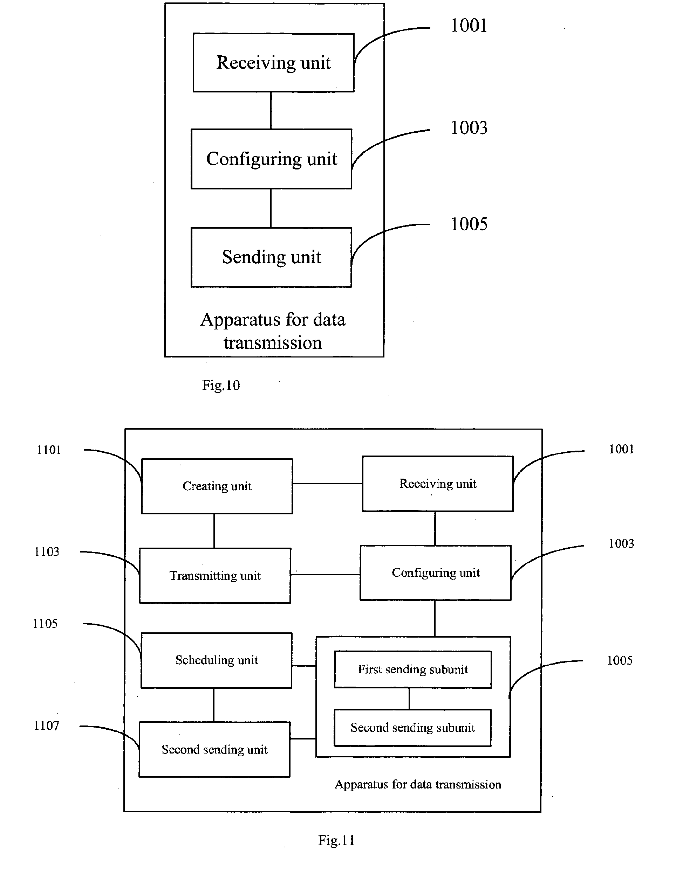

As shown in Fig. 10, a schematic diagram of a structure of an apparatus for data transmission in an embodiment of the present invention is illustrated. The apparatus for data transmission may be a network element in a communication network such as a base station controller of an access network. For example, the base station controller may be a RNC in a WCDMA system, or may be a base station controller (BSC, Base Station Controller) in a GSM or CDMA system, etc. The base station controller may have different names according to the different modes of communication network, which is not limited in the embodiments of the present invention.

The apparatus for data transmission comprises a receiving unit 1001, a configuring unit 1003 and a sending unit 1005.

The receiving unit 1001 is configured to receive capability information reported by a user equipment, the capability information indicates that dual carrier frequency/multi carrier frequency transmission is supported in a cell_forward access channel (CELL_FACH) state.

For example, the receiving unit 1001 is configured to receive a radio resource control (RRC) message sent from the user equipment, wherein the RRC message carries the capability information indicating that dual carrier frequency/multi carrier frequency transmission is supported by the user equipment in a cell_forward access channel (CELL_FACH) state. The RRC message may be a radio resource control connection request (RRC Connection Request) message or a radio resource control connection setup complete (RRC Connection Setup Complete) message, etc.

The configuring unit 1003 is configured to configure configuration information of dual carrier frequency/multi carrier frequency for the user equipment operating in the CELL_FACH and is configured to send the configuration information to the user equipment.

The sending unit 1005 is configured to send the configuration information of dual carrier frequency/multi carrier frequency to a base station and is configured to send a dual carrier frequency/multi carrier frequency operating parameter to the base station through the user data, wherein the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

The sending unit 1005 further comprises: a first sending subunit and a second sending subunit.

The first sending subunit is configured to send the dual carrier frequency/multi carrier frequency operating parameter carried in a frame protocol (FP) of the user data to the base station.

The second sending subunit is configured to send the configuration information of dual carrier frequency/multi carrier frequency to the base station.

The first sending subunit is specially configured to send the dual carrier frequency/multi carrier frequency operating parameter carried in the high speed downlink shared channel data frame type 2 (HS-DSCH DATA FRAME TYPE 2) of the FP to the base station.

The receiving unit 1001 is further configured to receive a configuration response message sent from the user equipment, wherein the configuration response message carries an initial measurement result of signal strength or signal quality of secondary carrier frequency.

The dual carrier frequency/multi carrier frequency operating parameter includes a new IE flag (New Flags IE) indicating whether there is paired cell information, and the dual carrier frequency/multi carrier frequency operating parameter further includes the paired cell information if the new IE flag indicates that there is the paired cell information.

If the dual carrier frequency/multi carrier frequency operating parameter includes the paired cell information, the dual carrier frequency/multi carrier frequency operating parameter further includes the number of paired cells and/or a high speed shared channel radio network temporary identity (H-RNTI) and/or a measurement result of signal strength or quality of secondary carried frequency cell.

In another embodiment of the present invention, as shown in Fig. 11, a schematic diagram of another structure of an apparatus for data transmission in another embodiment of the present invention is illustrated. The apparatus for data transmission further comprises: a creating unit 1101 and a transmitting unit 1103.

The creating unit 1101 is configured to create pre-paired cell information of a local cell in which currently the user equipment is. For example, the creating unit 1101 is configured to create pre-paired cell information of a local cell in which currently the user equipment is in the process of cell setup or physical shared channel reconfiguration.

The transmitting unit 1103 is configured to send the pre-paired cell information of the local cell to the user equipment by broadcasting system information.

In another embodiment of the present invention, the apparatus for data transmission further comprises: a scheduling unit 1105 and a second sending subunit 1107.

The scheduling unit 1105 is configured to schedule a pre-paired cell in the pre-paired cell information according to the pre-paired cell information.

The second sending subunit 1107 is configured to send the configuration information of the dual carrier frequency/multi carrier frequency to the user equipment in the scheduled pre-paired cell.

The specific description of the foregoing method may be used as a reference for the specific functions and operating details of the apparatus for data transmission and the units therein, which will be not repeated redundantly herein.

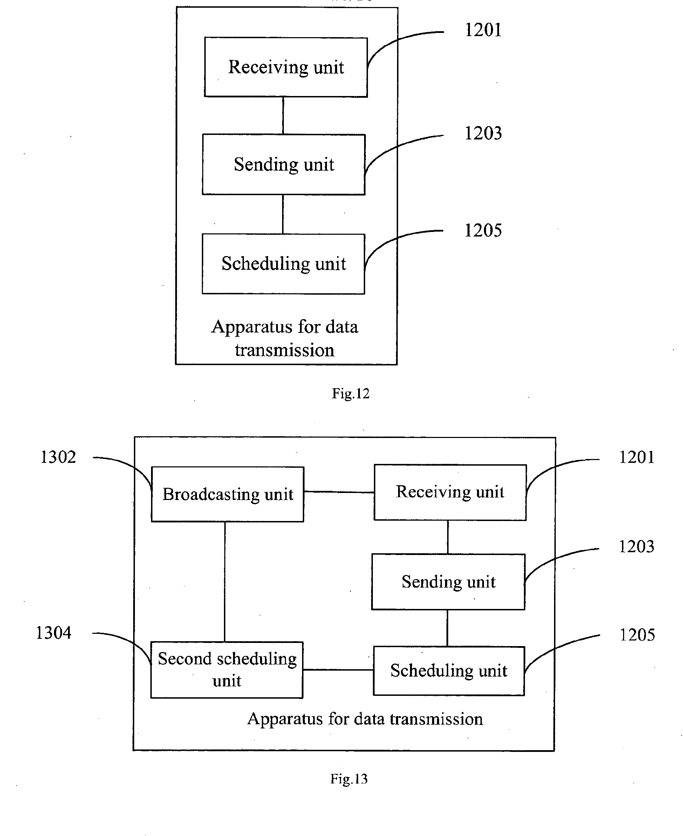

As shown in Fig. 12, a schematic diagram of a structure of an apparatus for data transmission in another embodiment of the present invention is illustrated. The apparatus for data transmission may be a network element in a communication network, such as a base station of an access network. For example, the base station controller may be a Node B in a WCDMA system, or may be a base station (BTS, Base Transceiver Station) in a GSM or CDMA system, or an eNodeB in a LTE network, etc. The base station may have different names according to the different modes of communication network, which is not limited in the embodiments of the present invention.

The apparatus for data transmission may comprise: a receiving unit 1201, a sending unit 1203 and a scheduling unit 1205.

The receiving unit 1201, is configured to receive capability information which is reported by a user equipment and indicates that dual carrier frequency/multi carrier frequency transmission is supported in a cell_forward access channel (CELL_FACH) state; and is configured to receive configuration information of dual carrier frequency/multi carrier frequency for the user equipment operating in the CELL_FACH sent from a base station controller; and receive a dual carrier frequency/multi carrier frequency operating parameter sent from the base station controller through the user data.

For example, the receiving unit 1201 is configured to receive a radio resource control (RRC) message sent from the user equipment, wherein the RRC message carries the capability information indicating that dual carrier frequency/multi carrier frequency transmission is supported by the user equipment in a cell_forward access channel (CELL_FACH) state. The RRC message may be a radio resource control connection request (RRC Connection Request) message or a radio resource control connection setup complete (RRC Connection Setup Complete) message, etc.

The sending unit 1203 is configured to send the configuration information of dual carrier frequency/multi carrier frequency to the user equipment.

The scheduling unit 1205 is configured to perform dual carrier frequency/multi carrier frequency scheduling for the user data on the carrier frequency indicated by the dual carrier frequency/multi carrier frequency operating parameter.

In another embodiment of the present invention, the dual carrier frequency/multi carrier frequency operating parameter is carried by a frame protocol (FP) sent from the base station controller.

In another embodiment of the present invention, the step of the dual carrier frequency/multi carrier frequency operating parameter being carried by a frame protocol (FP) sent from the base station controller comprises that: the sending unit 1203 makes the dual carrier frequency/multi carrier frequency operating parameter carried in the high speed downlink shared channel data frame type 2 (HS-DSCH DATA FRAME TYPE 2) of the FP.

In another embodiment of the present invention, the dual carrier frequency/multi carrier frequency operating parameter includes a new IE flag (New Flags IE) indicating whether there is paired cell information, and the dual carrier frequency/multi carrier frequency operating parameter further includes the paired cell information if the new IE flag indicates that there is the paired cell information.

In another embodiment of the present invention, the receiving unit 1201 is further configured to receive pre-paired cell information of a local cell in which currently the user equipment is, and the pre-paired cell information is created by the base station controller.

In another embodiment of the present invention, as shown in Fig. 13, a schematic diagram of another structure of an apparatus for data transmission in another embodiment of the present invention is illustrated. The apparatus for data transmission further comprises a broadcasting unit 1302 configured to send the pre-paired cell information of the local cell to the user equipment by broadcasting system information.

In another embodiment of the present invention, the apparatus for data transmission further comprises a second scheduling unit 1304 configured to schedule a pre-paired cell in the pre-paired cell information according to the pre-paired cell information; the sending unit 1203 is further configured to send the configuration information of dual carrier frequency/multi carrier frequency to the user equipment in the scheduled pre-paired cell.

Those skilled in the art may understand clearly that, for convenience and simplicity of description, corresponding processes of the aforementioned method embodiments may be referred to for specific operation processes of the above described systems, devices and units, which will not be repeated redundantly herein.

In the several embodiments provided by the present application, it should be understood that disclosed systems, devices and methods may be implemented by other manners. For example, device embodiments described above are just schematic. For example, the division of units is just a division of logic functions, and there may be other division manners for practical implementations. For example, multiple units or components may be combined or integrated into other system, or some features may be neglected or may not be performed. At another point, the displayed or discussed mutual coupling or direct coupling or communication link may be through some interfaces, indirect coupling or communication link among devices or units may be in an electrical form, a mechanical form or other form.

The units described as separated parts may be or may be not physically separated, and the parts displayed as units may be or may be not physical units, which may be located in one place or distributed in multiple network elements. Some or all of the units therein may be selected to achieve the purpose of solutions of the present invention according to the actual demands.

In addition, in various embodiments of the present invention, various functional units may be integrated into one processing unit, or each unit may exist separately and physically, or two or more units may be integrated into one unit. The above integrated units may be implemented in the form of hardware or may be implemented in the form of software functional unit.

When the integrated unit is implemented in the form of a software functional unit and is sold or used as an independent product, the integrated unit may be stored in a computer readable storage medium. Based on this understanding, the technical solutions of the present invention or the part that makes contributes to the prior art may be substantially embodied in the form of a software product. The computer software product may be stored in a storage medium, and includes a number of instructions that enable a computer equipment (may be a personal computer, a server, or a network equipment) to execute all or part of steps of the method described in various embodiments of the present invention. The preceding storage media comprise various media which can store codes, such as a U disk, a removable hard disk, a read-only memory (ROM, Read-Only Memory), a random access memory (RAM, Random Access Memory), a magnetic disk, an optical disk, or the like.

The foregoing is just some specific embodiments of the invention rather than limits the protection scope of the invention. It is easy for those skilled in the art to think of changes or substitutions within the technical scope disclosed by the present invention, which should fall into the protection scope of the present invention. Therefore, the protection scope of the present invention should be defined by the protection scope of the claims.

## Claims

1. A method for data transmission, comprising:
receiving (501), by a base station controller, capability information reported by a user equipment, wherein the capability information is used for indicating that dual carrier frequency/multi carrier frequency transmission is supported in a cell_forward access channel, CELL_FACH, state;
configuring (503), by the base station controller, configuration information of the dual carrier frequency/multi carrier frequency for the user equipment operating in the CELL_FACH;
sending (503), by the base station controller, the configuration information to the user equipment; and
sending (505), by the base station controller, a dual carrier frequency/multi carrier frequency operating parameter to a base station through user data, wherein the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

2. The method according to claim 1, wherein the receiving (501) the capability information reported by the user equipment comprises:
receiving (701) a radio resource control, RRC, message sent from the user equipment, wherein the RRC message carries the capability information indicating that the dual carrier frequency/multi carrier frequency transmission is supported by the user equipment in a cell_forward access channel, CELL_FACH.

3. The method according to claim 1, wherein the sending (505) the dual carrier frequency/multi carrier frequency operating parameter to the base station through user data comprises:
sending (705, 806) the dual carrier frequency/multi carrier frequency operating parameter carried by a frame protocol, FP, of the user data to the base station.

4. The method according to claim 3, wherein the sending (705, 806) the dual carrier frequency/multi carrier frequency operating parameter carried by the frame protocol, FP, of the user data to the base station comprises:
sending the dual carrier frequency/multi carrier frequency operating parameter carried in a high speed downlink shared channel data frame type 2, HS-DSCH DATA FRAME TYPE 2, of the FP frame to the base station.

5. The method according to any one of claims 1-4, wherein the dual carrier frequency/multi carrier frequency operating parameter includes a new IE flag, New Flags IE, indicating whether there is paired cell information, and further includes the paired cell information if the new IE flag indicates that there is the paired cell information.

6. The method according to claim 5, wherein if the dual carrier frequency/multi carrier frequency operating parameter includes the paired cell information, the dual carrier frequency/multi carrier frequency operating parameter further includes any one of a number of a paired cell(s), a high speed shared channel radio network temporary identity, H-RNTI, a measurement result of the signal strength and quality of secondary carried frequency cell.

7. The method according to claim 5, wherein if the dual carrier frequency/multi carrier frequency operating parameter includes the paired cell information, the paired cell information is a paired cell identity or an index of the paired cell identity in a coordination neighbour cell list.

8. The method according to claim 7, wherein if there are more than one coordination neighbour cell lists, an identity of a coordination neighbour cell list is further indicated in the FP while the index of the paired cell identity in the coordination neighbour cell list is indicated in the FP.

9. The method according to claim 1, further comprising:
receiving (704, 805), by the base station controller, a configuration response message sent from the user equipment, wherein the configuration response message carries an initial measurement result of the signal strength or signal quality of secondary carrier frequency.

10. The method according to claim 1, before the receiving (501) the capability information reported by the user equipment, further comprising:
creating, by the base station controller, pre-paired cell information of a local cell in which currently the user equipment is; and
sending, by the base station controller, the pre-paired cell information of the local cell to the user equipment by broadcasting system information.

11. The method according to claim 10, wherein the pre-paired cell information includes a cell index of the pre-paired cell(s).

12. The method according to claim 10, wherein after the configuring (503) the configuration information of the dual carrier frequency/multi carrier frequency for the user equipment operating in the CELL_FACH, further comprising:
scheduling, by the base station controller, a pre-paired cell(s) in the pre-paired cell information according to the pre-paired cell information; and
sending, by the base station controller, the configuration information of the dual carrier frequency/multi carrier frequency to the user equipment in the scheduled pre-paired cell(s).

13. The method according to claim 10, wherein the creating the pre-paired cell information of the local cell in which currently the user equipment is comprises:
creating the pre-paired cell information of the local cell in which currently the user equipment is during a process of cell setup or physical shared channel reconfiguration.

14. An apparatus for data transmission, comprising:
a receiving unit (1001), configured to receive capability information reported by a user equipment, wherein the capability information is used for indicating that dual carrier frequency/multi carrier frequency transmission is supported in a cell_forward access channel, CELL_FACH, state;
a configuring unit (1003), configured to configure configuration information of the dual carrier frequency/multi carrier frequency for the user equipment operating in the CELL_FACH
a sending unit (1005), configured to send the configuration information to the user equipment, send the configuration information of the dual carrier frequency/multi carrier frequency to a base station and send a dual carrier frequency/multi carrier frequency operating parameter to the base station through user data, wherein the dual carrier frequency/multi carrier frequency operating parameter is used for instructing the base station to perform dual carrier frequency/multi carrier frequency scheduling for the user data on the carrier frequency indicated by the dual carrier frequency/multi carrier frequency operating parameter.

15. The apparatus according to claim 14, wherein the sending unit (1005) further comprises:
a first sending subunit, configured to send the dual carrier frequency/multi carrier frequency operating parameter carried in a frame protocol, FP, of the user data to the base station.

16. The apparatus according to claim 15, wherein the first sending subunit is specially configured to send the dual carrier frequency/multi carrier frequency operating parameter carried in a high speed downlink shared channel data frame type 2, HS-DSCH DATA FRAME TYPE 2, of the FP frame to the base station.

17. The apparatus according to claim 14, wherein the receiving unit (1001) is further configured to receive a configuration response message sent from the user equipment, wherein the configuration response message carries an initial measurement result of signal strength or signal quality of secondary carrier frequency.

18. The apparatus according to any one of claims 14-17, wherein the dual carrier frequency/multi carrier frequency operating parameter includes a new IE flag, New Flags IE, indicating whether there is paired cell information, and further includes the paired cell information if the new IE flag indicates that there is the paired cell information.

19. The apparatus according to claim 18, wherein if the dual carrier frequency/multi carrier frequency operating parameter includes the paired cell information, the dual carrier frequency/multi carrier frequency operating parameter further includes any one of a number of paired cells, a high speed shared channel radio network temporary identity, H-RNTI, a measurement result of signal strength and quality of secondary carried frequency cell.

20. The apparatus according to claim 14, further comprising:
a creating unit (1101), configured to create pre-paired cell information of a local cell in which currently the user equipment is; and
a transmitting unit (1103), configured to send the pre-paired cell information of the local cell to the user equipment by broadcasting system information.

21. The apparatus according to claim 20, further comprising:
a scheduling unit (1105), configured to schedule pre-paired cell in the pre-paired cell information according to the pre-paired cell information; and
a second sending subunit (1107), configured to send the configuration information of the dual carrier frequency/multi carrier frequency to the user equipment in the scheduled a pre-paired cell(s).

22. A method for data transmission, comprising:
receiving (901), by a base station, capability information indicating that dual carrier frequency/multi carrier frequency transmission is supported in a cell_forward access channel, CELL_FACH, state, wherein the capability information is reported by a user equipment;
receiving (903), by the base station, configuration information of the dual carrier frequency/multi carrier frequency for the user equipment operating in the CELL_FACH sent from a base station controller;
sending (903), by the base station, the configuration information to the user equipment;
receiving (905), by the base station, a dual carrier frequency/multi carrier frequency operating parameter sent from the base station controller through user data; and
performing (905), by the base station, dual carrier frequency/multi carrier frequency scheduling for the user data on the carrier frequency indicated by the dual carrier frequency/multi carrier frequency operating parameter.

23. The method according to claim 22, wherein the receiving (905) a dual carrier frequency/multi carrier frequency operating parameter sent from the base station controller through user data comprises:
receiving a frame protocol, FP, carrying the dual carrier frequency/multi carrier frequency operating parameter, the FP is sent from the base station controller.

24. The method according to claim 23, wherein the FP carrying the dual carrier frequency/multi carrier frequency operating parameter, comprises:
carrying the dual carrier frequency/multi carrier frequency operating parameter in a high speed downlink shared channel data frame type 2, HS-DSCH DATA FRAME TYPE 2, of the FP frame.

25. The method according to any one of claims 22-24, wherein the dual carrier frequency/multi carrier frequency operating parameter includes a new IE flag, New Flags IE, indicating whether there is paired cell information, and further includes the paired cell information if the new IE flag indicates that there is the paired cell information.

26. The method according to claim 25, wherein if the dual carrier frequency/multi carrier frequency operating parameter includes the paired cell information, the dual carrier frequency/multi carrier frequency operating parameter further includes any one of a number of paired cells, a high speed shared channel radio network temporary identity, H-RNTI, a measurement result of signal strength and quality of secondary carried frequency cell.

27. The method according to claim 22, wherein before the receiving (901) the capability information indicating that the dual carrier frequency/multi carrier frequency transmission is supported in the cell_forward access channel, CELL_FACH, state, further comprising:
receiving, by the base station, pre-paired cell information of a local cell in which currently the user equipment is, wherein the pre-paired cell information is created by the base station controller; and
sending, by the base station, the pre-paired cell information of the local cell to the user equipment by broadcasting system information.

28. The method according to claim 27, further comprising:
scheduling, by the base station, a pre-paired cell(s) in the pre-paired cell information according to the pre-paired cell information; and
sending, by the base station, the configuration information of the dual carrier frequency/multi carrier frequency to the user equipment in the scheduled pre-paired cell(s).

29. An apparatus for data transmission, comprising:
a receiving unit (1201), configured to receive capability information indicating that dual carrier frequency/multi carrier frequency transmission is supported in a cell_forward access channel, CELL_FACH, state, wherein the capability information is reported by a user equipment; and receive configuration information of the dual carrier frequency/multi carrier frequency for the user equipment operating in the CELL_FACH sent from a base station controller; and receive a dual carrier frequency/multi carrier frequency operating parameter sent from the base station controller through user data;
a sending unit (1203), configured to send the configuration information of the dual carrier frequency/multi carrier frequency to the user equipment;
a scheduling unit (1205), configured to perform dual carrier frequency/multi carrier frequency scheduling for the user data on the carrier frequency indicated by the dual carrier frequency/multi carrier frequency operating parameter.

30. The apparatus according to claim 29, wherein the dual carrier frequency/multi carrier frequency operating parameter is carried by a frame protocol, FP, sent from the base station controller.

31. The apparatus according to claim 29, wherein the dual carrier frequency/multi carrier frequency operating parameter is carried in a high speed downlink shared channel data frame type 2, HS-DSCH DATA FRAME TYPE 2, of the FP frame.

32. The apparatus according to any one of claims 29-31, wherein the dual carrier frequency/multi carrier frequency operating parameter includes a new IE flag, New Flags IE, indicating whether there is paired cell information, and further includes the paired cell information if the new IE flag indicates that there is the paired cell information.

33. The apparatus according to claim 29, wherein the receiving unit (1201) is further configured to receive pre-paired cell information of a local cell in which currently the user equipment is, the pre-paired cell information is created by the base station controller;
the apparatus further comprises:
a broadcasting unit (1302), configured to send the pre-paired cell information of the local cell to the user equipment by broadcasting system information.

34. The apparatus according to claim 33, **characterized by**, further comprising:
a second scheduling unit (1304), configured to schedule a pre-paired cell(s) in the pre-paired cell information according to the pre-paired cell information; and
the sending unit (1203) is further configured to send the configuration information of dual carrier frequency/multi carrier frequency to the user equipment in the scheduled pre-paired cell(s).

## Patentansprüche

1. Verfahren zur Datenübertragung, das Folgendes umfasst:
Empfangen (501) durch eine Basisstationssteuerung von Fähigkeitsinformationen, die durch ein Anwendergerät berichtet werden, wobei die Fähigkeitsinformationen verwendet werden, um anzugeben, dass Doppelträgerfrequenz-/Mehrträgerfrequenz-Übertragung in einem "cell_forward"-Zugangskanal-Zustand (cell_forward access channel state, CELL_FACH-Zustand) unterstützt wird;
Konfigurieren (503) durch die Basisstationssteuerung von Konfigurationsinformationen der Doppelträgerfrequenz/Mehrträgerfrequenz für das Anwendergerät, das in dem CELL_FACH arbeitet;
Senden (503) durch die Basisstationssteuerung der Konfigurationsinformationen zu dem Anwendergerät; und
Senden (505) durch die Basisstationssteuerung eines Doppelträgerfrequenz-/ Mehrträgerfrequenz-Betriebsparameters durch Anwenderdaten zu einer Basisstation, wobei der Doppelträgerfrequenz-/Mehrträgerfrequenz-Betriebsparameter verwendet wird, um die Basisstation anzuweisen, Doppelträgerfrequenz-/Mehrträgerfrequenz-Planung für die Anwenderdaten auf der Trägerfrequenz auszuführen, die durch den Doppelträgerfrequenz-/Mehrträgerfrequenz-Betriebsparameter angegeben ist.

2. Verfahren nach Anspruch 1, wobei das Empfangen (501) der durch das Anwendergerät berichteten Fähigkeitsinformationen Folgendes umfasst:
Empfangen (701) einer von dem Anwendergerät gesendeten Funkbetriebsmittelsteuerungs-Nachricht (radio resource control message, RRC-Nachricht), wobei die RRC-Nachricht die Fähigkeitsinformationen führt, die angeben, dass die Doppelträgerfrequenz-/ Mehrträgerfrequenz-Übertragung durch das Anwendergerät in einem "cell_forward"-Zugangskanal, CELL_FACH, unterstützt wird.

3. Verfahren nach Anspruch 1, wobei das Senden (505) des Doppelträgerfrequenz-/ Mehrträgerfrequenz-Betriebsparameters zu der Basisstation durch Anwenderdaten Folgendes umfasst:
Senden (705, 806) des Doppelträgerfrequenz-/Mehrträgerfrequenz-Betriebsparameters, geführt durch ein Rahmenprotokoll (frame protocol, FP) der Anwenderdaten, zu der Basisstation.

4. Verfahren nach Anspruch 3, wobei das Senden (705, 806) des Doppelträgerfrequenz-/Mehrträgerfrequenz-Betriebsparameters, geführt durch das Rahmenprotokoll, FP, der Anwenderdaten, zu der Basisstation Folgendes umfasst:
Senden des Doppelträgerfrequenz-/Mehrträgerfrequenz-Betriebsparameters, geführt in einem Datenrahmentyp 2 eines gemeinsam verwendeten Hochgeschwindigkeitsabwärtsstreckenkanals (high speed downlink shared channel data frame type 2, HS-DSCH DATA FRAME TYPE 2) des FP-Rahmens, zu der Basisstation.

5. Verfahren nach einem der Ansprüche 1-4, wobei der Doppelträgerfrequenz-/Mehrträgerfrequenz-Betriebsparameter ein neues "IE-Flag", "New Flags IE", enthält, das angibt, ob Informationen über gepaarte Zellen vorhanden sind, und ferner die Informationen über die gepaarten Zellen enthält, falls das neue "IE-Flag" angibt, dass die Informationen über gepaarte Zellen vorhanden sind.

6. Verfahren nach Anspruch 5, wobei dann, wenn der Doppelträgerfrequenz-/Mehrträgerfrequenz-Betriebsparameter die Informationen über gepaarte Zellen enthält, der Doppelträgerfrequenz-/Mehrträgerfrequenz-Betriebsparameter ferner ein beliebiges aus einer Anzahl von gepaarten Zellen, einer temporären Funknetzkennung des gemeinsam verwendeten Hochgeschwindigkeitskanals (high speed shared channel radio network temporary identity, H-RNTI), einem Messergebnis der Signalstärke und der Qualität der sekundär geführten Frequenzzelle enthält.

7. Verfahren nach Anspruch 5, wobei dann, wenn der Doppelträgerfrequenz-/Mehrträgerfrequenz-Betriebsparameter die Informationen über gepaarte Zellen enthält, die Informationen über gepaarte Zellen eine Kennung der gepaarten Zelle oder ein Index der Kennung der gepaarten Zelle in einer Koordinationsnachbarzellenliste sind.

8. Verfahren nach Anspruch 7, wobei dann, wenn mehr als eine Koordinationsnachbarzellenliste vorhanden ist, eine Kennung einer Koordinationsnachbarzellenliste ferner in dem FP angegeben ist, während der Index der Kennung der gepaarten Zelle in der Koordinationsnachbarzellenliste in dem FP angegeben ist.

9. Verfahren nach Anspruch 1, das ferner Folgendes umfasst:
Empfangen (704, 805) durch die Basisstationssteuerung einer von dem Anwendergerät gesendeten Konfigurationsantwortnachricht, wobei die Konfigurationsantwortnachricht ein initiales Messergebnis der Signalstärke oder Signalqualität der sekundären Trägerfrequenz führt.

10. Verfahren nach Anspruch 1, das vor dem Empfangen (501) der durch das Anwendergerät berichteten Fähigkeitsinformationen ferner Folgendes umfasst:
Erzeugen durch die Basisstationssteuerung von Informationen über vorgepaarte Zellen einer lokalen Zelle, in der sich das Anwendergerät aktuell aufhält; und
Senden durch die Basisstationssteuerung der Informationen über vorgepaarten Zellen einer lokalen Zelle durch Rundsenden von Systeminformationen zu dem Anwendergerät.

11. Verfahren nach Anspruch 10, wobei die Informationen über vorgepaarte Zellen einen Zellindex der vorgepaarten Zelle(n) enthalten.

12. Verfahren nach Anspruch 10, wobei das Verfahren nach dem Konfigurieren (503) der Konfigurationsinformationen der Doppelträgerfrequenz/Mehrträgerfrequenz für das Anwendergerät, das in dem CELL_FACH arbeitet, ferner Folgendes umfasst:
Planen durch die Basisstationssteuerung einer/von vorgepaarten Zelle(n) in den Informationen über vorgepaarte Zellen gemäß den Informationen über vorgepaarte Zellen; und
Senden durch die Basisstationssteuerung der Konfigurationsinformationen der Doppelträgerfrequenz/Mehrträgerfrequenz zu dem Anwendergerät in der/den geplanten vorgepaarten Zelle(n).

13. Verfahren nach Anspruch 10, wobei das Erzeugen der Informationen über vorgepaarte Zellen der lokalen Zelle, in der sich das Anwendergerät aktuell befindet, Folgendes umfasst:
Erzeugen der Informationen über vorgepaarte Zellen der lokalen Zelle, in der sich das Anwendergerät aktuell befindet, während eines Prozesses des Verbindungsaufbaus oder der Neukonfiguration des gemeinsam verwendeten physikalischen Kanals.

14. Vorrichtung zur Datenübertragung, die Folgendes umfasst:
eine Empfangseinheit (1001), die konfiguriert ist, Fähigkeitsinformationen, die durch ein Anwendergerät berichtet werden, zu empfangen, wobei die Fähigkeitsinformationen verwendet werden, um anzugeben, dass Doppelträgerfrequenz-/Mehrträgerfrequenz-Übertragung in einem "cell_forward"-Zugangskanal-Zustand, CELL_FACH-Zustand,
unterstützt wird;
eine Konfigurationseinheit (1003), die konfiguriert ist, Konfigurationsinformationen der Doppelträgerfrequenz/Mehrträgerfrequenz für das Anwendergerät, das in dem CELL_FACH arbeitet, zu konfigurieren;
eine Sendeeinheit (1005), die konfiguriert ist, die Konfigurationsinformationen zu dem Anwendergerät zu senden, die Konfigurationsinformationen der
Doppelträgerfrequenz/Mehrträgerfrequenz zu einer Basisstation zu senden und einen Doppelträgerfrequenz-/Mehrträgerfrequenz-Betriebsparameter zu der Basisstation durch Anwenderdaten zu senden, wobei der Doppelträgerfrequenz-/Mehrträgerfrequenz-Betriebsparameter verwendet wird, um die Basisstation anzuweisen,
Doppelträgerfrequenz-/Mehrträgerfrequenz-Planung für die Anwenderdaten auf der Trägerfrequenz, die durch den Doppelträgerfrequenz-/Mehrträgerfrequenz-Betriebsparameter angegeben ist, auszuführen.

15. Vorrichtung nach Anspruch 14, wobei die Sendeeinheit (1005) ferner Folgendes umfasst:
eine erste Sendeuntereinheit, die konfiguriert ist, den Doppelträgerfrequenz-/Mehrträgerfrequenz-Betriebsparameter, geführt in einem Rahmenprotokoll, FP, der Anwenderdaten zu der Basisstation, zu senden.

16. Vorrichtung nach Anspruch 15, wobei die erste Sendeuntereinheit insbesondere konfiguriert ist, den Doppelträgerfrequenz-/Mehrträgerfrequenz-Betriebsparameter, geführt in einem Datenrahmentyp 2 des gemeinsam verwendeten Hochgeschwindigkeitsabwärtsstreckenkanals, HS-DSCH DATA FRAME TYPE 2, des FP-Rahmens, zu der Basisstation zu senden.

17. Vorrichtung nach Anspruch 14, wobei die Empfangseinheit (1001) ferner konfiguriert ist, eine von dem Anwendergerät gesendete Konfigurationsantwortnachricht zu empfangen, wobei die Konfigurationsantwortnachricht ein initiales Messergebnis der Signalstärke oder der Signalqualität der sekundären Trägerfrequenz führt.

18. Vorrichtung nach einem der Ansprüche 14-17, wobei der Doppelträgerfrequenz-/Mehrträgerfrequenz-Betriebsparameter ein neues "IE-Flag", "New Flags IE", enthält, das angibt, ob Informationen über gepaarte Zellen vorhanden sind, und ferner die Informationen über die gepaarten Zellen enthält, falls das neue "IE-Flag" angibt, dass die Informationen über gepaarte Zellen vorhanden sind.

19. Vorrichtung nach Anspruch 18, wobei dann, wenn der Doppelträgerfrequenz-/Mehrträgerfrequenz-Betriebsparameter die Informationen über gepaarte Zellen enthält, der Doppelträgerfrequenz-/Mehrträgerfrequenz-Betriebsparameter ferner ein beliebiges aus einer Anzahl von gepaarten Zellen, einer temporären Funknetzkennung des gemeinsam verwendeten Hochgeschwindigkeitskanals, H-RNTI, einem Messergebnis der Signalstärke und Qualität der sekundär geführten Frequenzzelle enthält.

20. Vorrichtung nach Anspruch 14, die ferner Folgendes umfasst:
eine Erzeugungseinheit (1101), die konfiguriert ist, Informationen über vorgepaarte Zellen einer lokalen Zelle, in der sich das Anwendergerät aktuell befindet, zu erzeugen; und
eine Übertragungseinheit (1103), die konfiguriert ist, Informationen über vorgepaarte Zellen der lokalen Zelle durch Rundsenden von Systeminformationen zu dem Anwendergerät zu senden.

21. Vorrichtung nach Anspruch 20, die ferner Folgendes umfasst:
eine Planungseinheit (1105), die konfiguriert ist, eine vorgepaarte Zelle in den Informationen über vorgepaarte Zellen gemäß den Informationen über vorgepaarte Zellen zu planen; und
eine zweite Sendeuntereinheit (1107), die konfiguriert ist, die Konfigurationsinformationen der Doppelträgerfrequenz/Mehrträgerfrequenz zu dem Anwendergerät in der/den geplanten vorgepaarten Zelle(n) zu senden.

22. Verfahren zur Datenübertragung, das Folgendes umfasst:
Empfangen (901) durch eine Basisstation von Fähigkeitsinformationen, die angeben, dass Doppelträgerfrequenz-/Mehrträgerfrequenz-Übertragung in einem "cell_forward"-Zugangskanal-Zustand, CELL_FACH-Zustand, unterstützt wird, wobei die Fähigkeitsinformationen durch ein Anwendergerät berichtet werden;
Empfangen (903) durch die Basisstation von Konfigurationsinformationen über die Doppelträgerfrequenz/Mehrträgerfrequenz für das Anwendergerät, das in dem CELL_FACH arbeitet, die von einer Basisstationssteuerung gesendet werden;
Senden (903) durch die Basisstation der Konfigurationsinformationen zu dem Anwendergerät;
Empfangen (905) durch die Basisstation eines Doppelträgerfrequenz-/Mehrträgerfrequenz-Betriebsparameters, der von der Basisstationssteuerung durch Anwenderdaten gesendet wird; und
Ausführen (905) durch die Basisstation von Doppelträgerfrequenz-/Mehrträgerfrequenz-Planung für die Anwenderdaten auf der Trägerfrequenz, die durch den Doppelträgerfrequenz-/Mehrträgerfrequenz-Betriebsparameter angegeben ist.

23. Verfahren nach Anspruch 22, wobei das Empfangen (905) eines Doppelträgerfrequenz-/Mehrträgerfrequenz-Betriebsparameters, der von der Basisstationssteuerung durch Anwenderdaten gesendet wird, Folgendes umfasst:
Empfangen eines Rahmenprotokolls, FP, das den Doppelträgerfrequenz-/Mehrträgerfrequenz-Betriebsparameter führt, wobei das FP von der Basisstationssteuerung gesendet wird.

24. Verfahren nach Anspruch 23, wobei das FP, das den Doppelträgerfrequenz-/ Mehrträgerfrequenz-Betriebsparameter führt, Folgendes umfasst:
Führen des Doppelträgerfrequenz-/Mehrträgerfrequenz-Betriebsparameters in einem Datenrahmentyp 2 eines gemeinsam verwendeten Hochgeschwindigkeitsabwärtsstreckenkanals, HS-DSCH DATA FRAME TYPE 2, des FP-Rahmens.

25. Verfahren nach einem der Ansprüche 22-24, wobei der Doppelträgerfrequenz-/Mehrträgerfrequenz-Betriebsparameter ein neues "IE-Flag", "New Flags IE", enthält, das angibt, ob Informationen über gepaarte Zellen vorhanden sind, und ferner die Informationen über die gepaarten Zellen enthält, falls das neue "IE-Flag" angibt, dass die Informationen über gepaarte Zellen vorhanden sind.

26. Verfahren nach Anspruch 25, wobei dann, wenn der Doppelträgerfrequenz-/Mehrträgerfrequenz-Betriebsparameter die Informationen über gepaarte Zellen enthält, der Doppelträgerfrequenz-/Mehrträgerfrequenz-Betriebsparameter ferner ein beliebiges aus einer Anzahl von gepaarten Zellen, einer temporären Funknetzkennung des gemeinsam verwendeten Hochgeschwindigkeitskanals, H-RNTI, einem Messergebnis der Signalstärke und Qualität der sekundär geführten Frequenzzelle enthält.

27. Verfahren nach Anspruch 22, wobei das Verfahren vor dem Empfangen (901) der Fähigkeitsinformationen, die angeben, dass die Doppelträgerfrequenz-/Mehrträgerfrequenz-Übertragung in dem "cell_forward"-Zugangskanal-Zustand, CELL_FACH-Zustand, unterstützt wird, ferner Folgendes umfasst:
Empfangen durch die Basisstation von Informationen über vorgepaarte Zellen einer lokalen Zelle, in der sich das Anwendergerät aktuell befindet, wobei die Informationen über vorgepaarte Zellen durch die Basisstationssteuerung erzeugt werden; und
Senden durch die Basisstation der Informationen über vorgepaarten Zellen der lokalen Zelle durch Rundsenden von Systeminformationen zu dem Anwendergerät.

28. Verfahren nach Anspruch 27, das ferner Folgendes umfasst:
Planen durch die Basisstation einer/von vorgepaarten Zelle(n) in den Informationen über vorgepaarte Zellen gemäß den Informationen über vorgepaarte Zellen; und
Senden durch die Basisstation der Konfigurationsinformationen der Doppelträgerfrequenz/Mehrträgerfrequenz zu dem Anwendergerät in der/den geplanten vorgepaarten Zelle(n).

29. Vorrichtung zur Datenübertragung, die Folgendes umfasst:
eine Empfangseinheit (1201), die konfiguriert ist, Fähigkeitsinformationen, die angeben, dass Doppelträgerfrequenz-/Mehrträgerfrequenz-Übertragung in einem "cell_forward"-Zugangskanal-Zustand, CELL_FACH-Zustand, unterstützt wird, zu empfangen, wobei die Fähigkeitsinformationen durch ein Anwendergerät berichtet werden; und
Konfigurationsinformationen über die Doppelträgerfrequenz/Mehrträgerfrequenz für das Anwendergerät, das in dem CELL_FACH arbeitet, die durch eine Basisstationssteuerung gesendet werden, zu empfangen; und einen Doppelträgerfrequenz-/Mehrträgerfrequenz-Betriebsparameter, der von der Basisstationssteuerung durch Anwenderdaten gesendet wird, zu empfangen;
eine Sendeeinheit (1203), die konfiguriert ist, die Konfigurationsinformationen über die Doppelträgerfrequenz/Mehrträgerfrequenz zu dem Anwendergerät zu senden;
eine Planungseinheit (1205), die konfiguriert ist, Doppelträgerfrequenz-/Mehrträgerfrequenz-Planung für die Anwenderdaten auf der Trägerfrequenz, die durch den Doppelträgerfrequenz-/Mehrträgerfrequenz-Betriebsparameter angegeben ist,
auszuführen.

30. Vorrichtung nach Anspruch 29, wobei der Doppelträgerfrequenz-/Mehrträgerfrequenz-Betriebsparameter durch ein Rahmenprotokoll, FP, das von der Basisstationssteuerung gesendet wird, geführt ist.

31. Vorrichtung nach Anspruch 29, wobei der Doppelträgerfrequenz-/Mehrträgerfrequenz-Betriebsparameter in einem Datenrahmentyp 2 eines gemeinsam verwendeten Hochgeschwindigkeitsabwärtsstreckenkanals, HS-DSCH DATA FRAME TYPE 2, des FP-Rahmens geführt ist.

32. Vorrichtung nach einem der Ansprüche 29-31, wobei der Doppelträgerfrequenz-/Mehrträgerfrequenz-Betriebsparameter ein neues "IE-Flag", "New Flags IE", enthält, das angibt, ob Informationen über gepaarte Zellen vorhanden sind, und ferner die Informationen über die gepaarten Zellen enthält, falls das neue "IE-Flag" angibt, dass die Informationen über gepaarte Zellen vorhanden sind.

33. Vorrichtung nach Anspruch 29, wobei die Empfangseinheit (1201) ferner konfiguriert ist, Informationen über vorgepaarte Zellen einer lokalen Zelle, in der sich das Anwendergerät aktuell befindet, zu empfangen, wobei die Informationen über vorgepaarte Zellen durch die Basisstationssteuerung erzeugt sind;
wobei die Vorrichtung ferner Folgendes umfasst:
eine Rundsendeeinheit (1302), die konfiguriert ist, Informationen über vorgepaarte Zellen der lokalen Zelle durch Rundsenden von Systeminformationen zu dem Anwendergerät zu senden.

34. Vorrichtung nach Anspruch 33, **dadurch gekennzeichnet, dass** sie ferner Folgendes umfasst:
eine zweite Planungseinheit (1304), die konfiguriert ist, (eine) vorgepaarte Zelle(n) in den Informationen über vorgepaarte Zellen gemäß den Informationen über vorgepaarte Zellen zu planen; und
wobei die Sendeeinheit (1203) ferner konfiguriert ist, Konfigurationsinformationen über die Doppelträgerfrequenz/Mehrträgerfrequenz zu dem Anwendergerät in der/den geplanten vorgepaarten Zelle(n) zu senden.

## Revendications

1. Procédé de transmission de données, comprenant les étapes suivantes :
recevoir (501), par un contrôleur de station de base, des informations de capacité rapportées par un équipement d'utilisateur, où les informations de capacité sont utilisées pour indiquer qu'une transmission de fréquence double porteuse/fréquence multiporteuse est supportée dans un état de canal d'accès réseau vers mobile, CELL_FACH ;
configurer (503), par le contrôleur de station de base, des informations de configuration de la fréquence double porteuse/fréquence multiporteuse pour l'équipement d'utilisateur fonctionnant dans le CELL_FACH ;
envoyer (503), par le contrôleur de station de base, les informations de configuration à l'équipement d'utilisateur ; et
envoyer (505), par le contrôleur de station de base, un paramètre de fonctionnement de fréquence double porteuse/fréquence multiporteuse à une station de base par l'intermédiaire de données d'utilisateur, où le paramètre de fonctionnement de fréquence double porteuse/fréquence multiporteuse est utilisé pour donner pour instruction à la station de base de procéder à une planification de fréquence double porteuse/fréquence multiporteuse pour les données d'utilisateur sur la fréquence porteuse indiquée par le paramètre de fonctionnement de fréquence double porteuse/fréquence multiporteuse.

2. Procédé selon la revendication 1, dans lequel la réception (501) des informations de capacité rapportées par l'équipement d'utilisateur comprend l'étape suivante :
recevoir (701) un message de commande de ressources radio, RRC, envoyé par l'équipement d'utilisateur, où le message RRC achemine les informations de capacité indiquant que la transmission de fréquence double porteuse/fréquence multiporteuse est supportée par l'équipement d'utilisateur dans un canal d'accès réseau vers mobile, CELL_FACH.

3. Procédé selon la revendication 1, dans lequel l'envoi (505) du paramètre de fonctionnement de fréquence double porteuse/fréquence multiporteuse à la station de base par l'intermédiaire de données d'utilisateur comprend l'étape suivante :
envoyer (705, 806) le paramètre de fonctionnement de fréquence double porteuse/fréquence multiporteuse acheminé par un protocole de trame, FP, des données d'utilisateur à la station de base.

4. Procédé selon la revendication 3, dans lequel l'envoi (705, 806) du paramètre de fonctionnement de fréquence double porteuse/fréquence multiporteuse acheminé par le protocole de trame, FP, des données d'utilisateur à la station de base comprend l'étape suivante :
envoyer le paramètre de fonctionnement de fréquence double porteuse/fréquence multiporteuse acheminé dans une trame de données de canal partagé de liaison descendante haut débit de type 2, HS-DSCH DATA FRAME TYPE 2, de la trame FP à la station de base.

5. Procédé selon l'une quelconque des revendications 1 à 4, dans lequel le paramètre de fonctionnement de fréquence double porteuse/fréquence multiporteuse comprend un nouveau drapeau IE, Nouveaux drapeaux IE, indiquant s'il y a des informations de cellule appariée, et comprend en outre les informations de cellule appariée si le nouveau drapeau IE indique qu'il y a les informations de cellule appariée.

6. Procédé selon la revendication 5, dans lequel, si le paramètre de fonctionnement de fréquence double porteuse/fréquence multiporteuse comprend les informations de cellule appariée, le paramètre de fonctionnement de fréquence double porteuse/fréquence multiporteuse comprend en outre l'un quelconque d'un certain nombre de cellules appariées, d'une identité temporaire de réseau radio à canal partagé haut débit, H-RNTI, d'un résultat de mesure de l'intensité du signal et d'une qualité de cellule de fréquence acheminée secondaire.

7. Procédé selon la revendication 5, dans lequel, si le paramètre de fonctionnement de fréquence double porteuse/fréquence multiporteuse comprend les informations de cellule appariée, les informations de cellule appariée sont une identité de cellule appariée ou un indice de l'identité de cellule appariée dans une liste de cellules voisines de coordination.

8. Procédé selon la revendication 7, dans lequel s'il y a plus d'une liste de cellules voisines de coordination, une identité d'une liste de cellules voisines de coordination est en outre indiquée dans le FP tandis que l'indice de l'identité de cellule appariée dans la liste de cellules voisines de coordination est indiqué dans le FP.

9. Procédé selon la revendication 1, comprenant en outre l'étape suivante :
recevoir (704, 805), par le contrôleur de station de base, un message de réponse de configuration envoyé par l'équipement d'utilisateur, où le message de réponse de configuration achemine un résultat de mesure initial de l'intensité du signal ou de la qualité du signal de la fréquence porteuse secondaire.

10. Procédé selon la revendication 1, comprenant en outre, avant la réception (501) des informations de capacité rapportées par l'équipement d'utilisateur, les étapes suivantes :
créer, par le contrôleur de station de base, des informations de cellule pré-appariée d'une cellule locale dans laquelle l'équipement d'utilisateur se trouve actuellement ; et
envoyer, par le contrôleur de station de base, les informations de cellule pré-appariée de la cellule locale à l'équipement d'utilisateur en diffusant des informations système.

11. Procédé selon la revendication 10, dans lequel les informations de cellule pré-appariée comprennent un indice de cellule de la/des cellule(s) pré-appariée(s).

12. Procédé selon la revendication 10, comprenant en outre, après la configuration (503) des informations de configuration de fréquence double porteuse/fréquence multiporteuse pour l'équipement d'utilisateur fonctionnant dans le CELL_FACH, les étapes suivantes :
planifier, par le contrôleur de station de base, une/des cellule(s) pré-appariée(s) dans les informations de cellule pré-appariée conformément aux informations de cellule pré-appariée ; et
envoyer, par le contrôleur de station de base, les informations de configuration de fréquence double porteuse/fréquence multiporteuse à l'équipement d'utilisateur dans la/les cellule(s) pré-appariée(s) planifiée(s).

13. Procédé selon la revendication 10, dans lequel la création des informations de cellule pré-appariée de la cellule locale dans laquelle l'équipement d'utilisateur se trouve présentement comprend l'étape suivante :
créer les informations de cellule pré-appariée de la cellule locale dans laquelle l'équipement d'utilisateur se trouve actuellement lors d'un processus de configuration de la cellule ou de reconfiguration de canal partagé physique.

14. Appareil de transmission de données, comprenant :
une unité de réception (1001), configurée pour recevoir des informations de capacité rapportées par un équipement d'utilisateur, où les informations de capacité sont utilisées pour indiquer qu'une transmission de fréquence double porteuse/fréquence multiporteuse est supportée dans un état de canal d'accès réseau vers mobile, CELL_FACH ;
une unité de configuration (1003), configurée pour configurer des informations de configuration de la fréquence double porteuse/fréquence multiporteuse pour l'équipement d'utilisateur fonctionnant dans le CELL_FACH ;
une unité d'envoi (1005), configurée pour envoyer les informations de configuration à l'équipement d'utilisateur, envoyer les informations de configuration de la fréquence double porteuse/fréquence multiporteuse à une station de base et envoyer un paramètre de fonctionnement de fréquence double porteuse/fréquence multiporteuse à la station de base par l'intermédiaire de données d'utilisateur, où le paramètre de fonctionnement de fréquence double porteuse/fréquence multiporteuse est utilisé pour donner pour instruction à la station de base de procéder à une planification de fréquence double porteuse/fréquence multiporteuse pour les données d'utilisateur sur la fréquence.porteuse indiquée par le paramètre de fonctionnement de fréquence double porteuse/fréquence multiporteuse.

15. Appareil selon la revendication 14, dans lequel l'unité d'envoi (1005) comprend en outre :
une première sous-unité d'envoi, configurée pour envoyer le paramètre de fonctionnement de fréquence double porteuse/fréquence multiporteuse acheminé dans un protocole de trame, FP, des données d'utilisateur à la station de base.

16. Appareil selon la revendication 15, dans lequel la première sous-unité d'envoi est spécialement configurée pour envoyer le paramètre de fonctionnement de fréquence double porteuse/fréquence multiporteuse acheminé dans une trame de données de canal partagé de liaison descendante haut débit de type 2, HS-DSCH DATA FRAME TYPE 2, de la trame FP à la station de base.

17. Appareil selon la revendication 14, dans lequel l'unité de réception (1001) est en outre configurée pour recevoir un message de réponse de configuration envoyé par l'équipement d'utilisateur, où le message de réponse de configuration achemine un résultat de mesure initial d'une intensité de signal ou d'une qualité de signal de la fréquence porteuse secondaire.

18. Appareil selon l'une quelconque des revendications 14 à 17, dans lequel le paramètre de fonctionnement de fréquence double porteuse/fréquence multiporteuse comprend un nouveau drapeau IE, Nouveaux drapeaux IE, indiquant s'il y a des informations de cellule appariée, et comprend en outre les informations de cellule appariée si le nouveau drapeau IE indique qu'il y a les informations de cellule appariée.

19. Appareil selon la revendication 18, dans lequel, si le paramètre de fonctionnement de fréquence double porteuse/fréquence multiporteuse comprend les informations de cellule appariée, le paramètre de fonctionnement de fréquence double porteuse/fréquence multiporteuse comprend en outre l'un quelconque d'un certain nombre de cellules appariées, d'une identité temporaire de réseau radio à canal partagé haut débit, H-RNTI, d'un résultat de mesure de l'intensité du signal et d'une qualité de cellule de fréquence acheminée secondaire.

20. Appareil selon la revendication 14, comprenant en outre :
une unité de création (1101), configurée pour créer des informations de cellule pré-appariée d'une cellule locale dans laquelle l'équipement d'utilisateur se trouve actuellement ; et
une unité de transmission (1103), configurée pour envoyer les informations de cellule pré-appariée de la cellule locale à l'équipement d'utilisateur par diffusion des informations système.

21. Appareil selon la revendication 20, comprenant en outre :
une unité de planification (1105), configurée pour planifier une cellule pré-appariée dans les informations de cellule pré-appariée conformément aux informations de cellule pré-appariée ; et
une seconde sous-unité d'envoi (1107), configurée pour envoyer les informations de configuration de fréquence double porteuse/fréquence multiporteuse à l'équipement d'utilisateur dans la/les cellule(s) pré-appariée(s) planifiée(s).

22. Procédé de transmission de données, comprenant les étapes suivantes :
recevoir (901), par une station de base, des informations de capacité indiquant qu'une transmission de fréquence double porteuse/fréquence multiporteuse est supportée dans un état de canal d'accès réseau vers mobile, CELL_FACH, où les informations de capacité sont rapportées par un équipement d'utilisateur ;
recevoir (903), par la station de base, des informations de configuration de la fréquence double porteuse/fréquence multiporteuse pour l'équipement d'utilisateur fonctionnant dans le CELL_FACH envoyées par un contrôleur de station de base ;
envoyer (903), par la station de base, les informations de configuration à l'équipement d'utilisateur ;
recevoir (905), par la station de base, un paramètre de fonctionnement de fréquence double porteuse/fréquence multiporteuse envoyé par le contrôleur de station de base par l'intermédiaire de données d'utilisateur ; et
effectuer (905), par la station de base, une planification de fréquence double porteuse/fréquence multiporteuse pour les données d'utilisateur sur la fréquence porteuse indiquée par le paramètre de fonctionnement de fréquence double porteuse/fréquence multiporteuse.

23. Procédé selon la revendication 22, dans lequel la réception (905) d'un paramètre de fonctionnement de fréquence double porteuse/fréquence multiporteuse envoyé par le contrôleur de station de base par l'intermédiaire des données d'utilisateur comprend l'étape suivante :
recevoir un protocole de trame, FP, acheminant le paramètre de fonctionnement de fréquence double porteuse/fréquence multiporteuse, le FP étant envoyé par le contrôleur de station de base.

24. Procédé selon la revendication 23, dans lequel le FP acheminant le paramètre de fonctionnement de fréquence double porteuse/fréquence multiporteuse comprend l'étape suivante :
acheminer le paramètre de fonctionnement de fréquence double porteuse/fréquence multiporteuse dans une trame de données de canal partagé de liaison descendante haut débit de type 2, HS-DSCH DATA FRAME TYPE 2, de la trame FP.

25. Procédé selon l'une quelconque des revendications 22 à 24, dans lequel le paramètre de fonctionnement de fréquence double porteuse/fréquence multiporteuse comprend un nouveau drapeau IE, Nouveaux drapeaux IE, indiquant s'il y a des informations de cellule appariée, et comprend en outre les informations de cellule appariée si le nouveau drapeau IE indique qu'il y a les informations de cellule appariée.

26. Procédé selon la revendication 25, dans lequel si le paramètre de fonctionnement de fréquence double porteuse/fréquence multiporteuse comprend les informations de cellule appariée, le paramètre de fonctionnement de fréquence double porteuse/fréquence multiporteuse comprend en outre l'un quelconque d'un certain nombre de cellules appariées, d'une identité temporaire de réseau radio à canal partagé haut débit, H-RNTI, d'un résultat de mesure de l'intensité du signal et d'une qualité de cellule de fréquence acheminée secondaire.

27. Procédé selon la revendication 22, dans lequel, avant la réception (901) des informations de capacité indiquant que la transmission de fréquence double porteuse/fréquence multiporteuse est supportée dans l'état de canal d'accès réseau vers mobile, CELL_FACH, le procédé comprend en outre les étapes suivantes :
recevoir, par la station de base, des informations de cellule pré-appariée d'une cellule locale dans laquelle l'équipement d'utilisateur se trouve actuellement, où les informations de cellule pré-appariée sont créées par le contrôleur de station de base ; et
envoyer, par la station de base, les informations de cellule pré-appariée de la cellule locale à l'équipement d'utilisateur en diffusant des informations système.

28. Procédé selon la revendication 27, comprenant en outre les étapes suivantes :
planifier, par la station de base, une/des cellule(s) pré-appariée(s) dans les informations de cellule pré-appariée conformément aux informations de cellule pré-appariée ; et
envoyer, par la station de base, les informations de configuration de la fréquence double porteuse/fréquence multiporteuse à l'équipement d'utilisateur dans la/les cellule(s) pré-appariée(s).

29. Appareil de transmission de données, comprenant :
une unité de réception (1201), configurée pour recevoir des informations de capacité indiquant qu'une transmission de fréquence double porteuse/fréquence multiporteuse est supportée dans un état de canal d'accès réseau vers mobile, CELL_FACH, où les informations de capacité sont rapportées par un équipement d'utilisateur ; et recevoir des informations de configuration de la fréquence double porteuse/fréquence multiporteuse pour l'équipement d'utilisateur fonctionnant dans le CELL_FACH envoyées par un contrôleur de station de base ; et recevoir un paramètre de fonctionnement de fréquence double porteuse/fréquence multiporteuse envoyé par le contrôleur de station de base par l'intermédiaire de données d'utilisateur ;
une unité d'envoi (1203), configurée pour envoyer les informations de configuration de la fréquence double porteuse/fréquence multiporteuse à l'équipement d'utilisateur ;
une unité de planification (1205), configurée pour effectuer une planification de fréquence double porteuse/fréquence multiporteuse pour les données d'utilisateur sur la fréquence porteuse indiquée par le paramètre de fonctionnement de fréquence double porteuse/fréquence multiporteuse.

30. Appareil selon la revendication 29, dans lequel le paramètre de fonctionnement de fréquence double porteuse/fréquence multiporteuse est acheminé par un protocole de trame, FP, envoyé par le contrôleur de station de base.

31. Appareil selon la revendication 29, dans lequel le paramètre de fonctionnement de fréquence double porteuse/fréquence multiporteuse est acheminé dans une trame de données de canal partagé de liaison descendante haut débit de type 2, HS-DSCH DATA FRAME TYPE 2, de la trame FP.

32. Appareil selon l'une quelconque des revendications 29 à 31, dans lequel le paramètre de fonctionnement de fréquence double porteuse/fréquence multiporteuse comprend un nouveau drapeau IE, Nouveaux drapeaux IE, indiquant s'il y a des informations de cellule appariée, et comprend en outre les informations de cellule appariée si le nouveau drapeau IE indique qu'il y a les informations de cellule appariée.

33. Appareil selon la revendication 29, dans lequel l'unité de réception (1201) est en outre configurée pour recevoir des informations de cellule pré-appariée d'une cellule locale dans laquelle l'équipement d'utilisateur se trouve actuellement, les informations de cellule pré-appariée étant créées par le contrôleur de station de base ;
l'appareil comprenant en outre :
une unité de diffusion (1302), configurée pour envoyer les informations de cellule pré-appariée de la cellule locale à l'équipement d'utilisateur par des informations de système de diffusion.

34. Appareil selon la revendication 33, **caractérisé en ce qu'**il comprend en outre :
une seconde unité de planification (1304), configurée pour planifier une ou plusieurs cellule(s) pré-appariée(s) dans les informations de cellule pré-appariée conformément aux informations de cellule pré-appariée ; et
l'unité d'envoi (1203) est en outre configurée pour envoyer les informations de configuration de fréquence double porteuse/fréquence multiporteuse à l'équipement d'utilisateur dans la/les cellule(s) pré-appariée(s) planifiée(s).
